# EUROPÄISCHE PATENTSCHRIFT

(11) **EP 3 701 606 B1**
(45) Veröffentlichungstag und Bekanntmachung des Hinweises auf die Patenterteilung: **06.07.2022**
(21) Anmeldenummer: 18795470.6
(22) Anmeldetag: 24.10.2018
(51) Int. Cl.: H02G 3/06, H01R 25/14, F21V 21/02, H01R 13/22, H02G 3/20, H02B 1/052

(54) **LEITUNGSHALTERSYSTEM, STROMSCHIENENELEMENT, VERFAHREN ZUR HERSTELLUNG EINES STROMSCHIENENELEMENTS UND VERFAHREN ZUR HERSTELLUNG EINES STROMSCHIENENSYSTEMS**
LINE HOLDER SYSTEM, BUSBAR ELEMENT, METHOD FOR PRODUCING A BUSBAR ELEMENT AND METHOD FOR PRODUCING A BUSBAR SYSTEM
SYSTÈME DE SUPPORT DE CÂBLES, ÉLÉMENT DE RAIL CONDUCTEUR, PROCÉDÉ DE FABRICATION D'UN ÉLÉMENT DE RAIL CONDUCTEUR ET PROCÉDÉ DE FABRICATION D'UN SYSTÈME DE RAILS CONDUCTEURS

(30) Priorität: 27.10.2017 DE 102017125231
(43) Veröffentlichungstag der Anmeldung: 02.09.2020
(73) Patentinhaber: SITECO GmbH, 83301 Traunreut (DE)
(72) Erfinder: HÖSLE, Tobias, 83329 Waging am See (DE); SPRICK, Oliver, 83071 Stephanskirchen (DE); SCHIEBL, Matthias, 83558 Maitenbeth (DE); KECHT, Sarah, 83355 Grabenstätt (DE)
(74) Vertreter: Schmidt, Steffen
(86) Internationale Anmeldenummer: PCT/EP2018/079182
(87) Internationale Veröffentlichungsnummer: WO 2019/081589

(56) Entgegenhaltungen:
- EP-A2- 2 624 389
- DE-A1-102010 032 383
- DE-U1-202016 104 790
- GB-A- 2 377 093
- GB-A- 2 407 439

## Beschreibung

Es werden ein Leitungshaltersystem, ein Stromschienenelement, ein Verfahren zur Herstellung eines Stromschienenelements und ein Verfahren zur Herstellung eines Stromschienensystems angegeben.

Ein Stromschienensystem mit verschiedenen Elementen ist beispielsweise in der Druckschrift DE 10 2010 055 789 B4 angegeben.

GB 2 377 093 A offenbart ein Leitungshalterungssystem entsprechend dem Oberbegriff des Anspruchs 1. Weitere Leitungshalterungssystem sind in EP 2 624 389 A2, DE 20 2016 104 790 U1, DE 10 2010 032 383 A1 und GB 2 407 439 A offenbart.

Es soll ein verbessertes Stromschienensystem mit einfacher Langeneinstellung und vereinfachter Montage angegeben werden. Weiterhin sollen ein verbessertes Leitungshaltersystem für ein Stromschienensystem, ein verbessertes Verbindungsteil, ein verbessertes Stromschienenelement, ein verbessertes mechanisches Verbindungselement, ein vereinfachtes Verfahren zur Herstellung eines Stromschienenelements und ein vereinfachtes Verfahren zur Herstellung eines Stromschienensystems angegeben werden.

Diese Aufgaben werden durch ein Leitungshaltersystem mit den Merkmalen des Patentanspruchs 1, durch ein Stromschienenelement mit den Merkmalen des Patentanspruchs 8, durch ein Verfahren zur Herstellung eines Stromschienenelements mit den Schritten des Patentanspruchs 11 und durch ein Verfahren zur Herstellung eines Stromschienensystems mit den Merkmalen des Patentanspruchs 12 gelöst.

Vorteilhafte Ausführungsformen und Weiterbildungen des Leitungshaltersystems, des Stromschienenelements, des Verfahrens zur Herstellung eines Stromschienenelements und das Verfahren zur Herstellung eines Stromschienensystems sind jeweils Gegenstand der abhängigen Ansprüche.

Erfindungsgemäß umfasst das Leitungshaltersystem für ein Stromschienenelement mindestens zwei Leitungshalter.

Erfindungsgemäß umfasst das Leitungshaltersystem ein Verbindungsteil, das die zwei Leitungshalter an ihren Stirnseiten mechanisch miteinander verbindet. Das Verbindungsteil weist eine Vielzahl an Ausnehmungen auf, die die Ausnehmungen der beiden Leitungshalter miteinander verbinden. Besonders verbindet das Verbindungsteil die Ausnehmungen der beiden Leitungshalter durchgehen miteinander, insbesondere in Richtung der Haupterstreckungsebene des Leitungshalters. Das Verbindungsteil führt besonders bevorzugt zu einer großen mechanischen Stabilität des Leitungshaltersystems.

Insbesondere kann das Verbindungsteil dazu vorgesehen und eingerichtet sein, zwei Leitungshalter innerhalb eines Stromschienenelements miteinander zu verbinden und nicht zwei Leitungshalter verschiedener Stromschienenelemente.

Erfindungsgemäß umfasst der Leitungshalter eine Vielzahl parallel zueinander angeordneter erster Ausnehmungen.

Erfindungsgemäß umfasst der Leitungshalter eine Vielzahl parallel zueinander angeordneter zweiter Ausnehmungen.

Die ersten Ausnehmungen und die zweiten Ausnehmungen sind hierbei zur Aufnahme elektrischer Leitungen vorgesehen. Außerdem verlaufen die ersten Ausnehmungen und die zweiten Ausnehmungen bevorzugt parallel zueinander.

Gemäß einer Ausführungsform sind die Leitungshalter des Leitungshaltersystems gleichartig ausgebildet. Dies vereinfacht die Herstellung des Leitungshaltersystems.

Gemäß einer weiteren Ausführungsform des Leitungshalters liegen die ersten Ausnehmungen in einer ersten Haupterstreckungsebene und die zweiten Ausnehmungen in einer zweiten Haupterstreckungsebene. Bevorzugt sind die erste Haupterstreckungsebene der ersten Ausnehmungen und die zweite Haupterstreckungsebene parallel zueinander und besonders bevorzugt weiterhin parallel zu einer Haupterstreckungsebene des Leitungshalters angeordnet.

Besonders bevorzugt sind die erste Haupterstreckungsebene und die zweite Haupterstreckungsebene in einer vertikalen Richtung, die senkrecht auf der ersten und der zweiten Haupterstreckungsebene steht, beabstandet voneinander angeordnet. Auf diese Art und Weise können die Ausnehmungen zur Aufnahme der elektrischen Leitungen besonders platzsparend angeordnet und der Leitungshalter besonders kompakt ausgebildet werden, wobei trotzdem die Vorgaben von gesetzlichen Normen, wie etwa der Leuchtennorm DIN EN 60598 oder der Notlichtnorm DIN EN 60598-2-22, hinsichtlich der Luft- und Kriechstrecken in dem Leitungshalter einfach eingehalten werden können. Die ermöglicht eine optisch ansprechende Ausgestaltung eines Stromschienensystems, von dem der Leitungshalter bevorzugt umfasst ist, sowie geringe Materialkosten bei der Herstellung des Leitungshalters.

Gemäß einer Ausführungsform des Leitungshalters verläuft die vertikale Richtung hierbei von einer Oberseite des Leitungshalters zu einer Unterseite des Leitungshalters, wobei die Oberseite des Leitungshalters der Unterseite gegenüberliegt. Die Oberseite des Leitungshalters und die Unterseite des Leitungshalters sind besonders bevorzugt ebenfalls im Wesentlichen parallel zu der ersten Haupterstreckungsebene und der zweiten Haupterstreckungsebene ausgebildet. Insbesondere hangt die vertikale Richtung nicht notwendigerweise von der Position des Leitungshalters ab. Insbesondere stimmt die vertikale Richtung nicht notwendigerweise mit der Richtung einer Gravitationskraft überein.

Gemäß einer weiteren Ausführungsform umfasst der Leitungshalter weitere Ausnehmungen, die bevorzugt in mindestens einer weiteren Haupterstreckungsebene liegen und in dieser weiteren Haupterstreckungsebene parallel zueinander angeordnet sind. Die weitere Haupterstreckungsebene ist in der vertikalen Richtung bevorzugt beabstandet zu der ersten Haupterstreckungsebene und beabstandet zu der zweiten Haupterstreckungsebene angeordnet. Weiterhin ist es auch möglich, dass die weiteren Ausnehmungen in mehreren weiteren Haupterstreckungsebenen jeweils parallel zueinander angeordnet sind, wobei die Haupterstreckungsebenen jeweils bevorzugt in der vertikalen Richtung beabstandet zueinander angeordnet sind. Sämtliche Haupterstreckungsebenen sind hierbei bevorzugt parallel zueinander angeordnet. Mit anderen Worten können die Ausnehmungen des Leitungshalters nicht nur in zwei in vertikaler Richtung beabstandeten Haupterstreckungsebenen angeordnet sein, sondern in mehreren in vertikaler Richtung beabstandeten Haupterstreckungsebenen.

Die Ausnehmungen können beispielsweise als U-förmige oder V-förmige Graben ausgebildet sein. Besonders bevorzugt weisen die Ausnehmungen Öffnungen auf, die von der Oberseite des Leitungshalters abgewandt sind. Besonders bevorzugt sind die Ausnehmungen von der Unterseite des nicht montierten Leitungshalters her durch die Öffnungen frei zuganglich. Auf diese Art und Weise können elektrische Leitungen in die Ausnehmungen eingesetzt werden.

Gemäß einer Ausführungsform ist der Leitungshalter aus Kunststoff gefertigt, besonders bevorzugt vollständig, beispielsweise mit Hilfe eines Spritzgussverfahrens. Besonders bevorzugt ist der Leitungshalter einstückig ausgebildet. Mit anderen Worten sind die ersten Ausnehmungen und die zweiten Ausnehmungen nicht separat voneinander gefertigt und dann zusammengesetzt, sondern bevorzugt aus einem gemeinsamen Material in einem gemeinsamen Verfahren hergestellt.

Gemäß einer weiteren Ausführungsform des Leitungshalters sind die ersten Ausnehmungen und die zweiten Ausnehmungen in einer horizontalen Richtung alternierend angeordnet. Mit anderen Worten ist bevorzugt jeweils eine erste Ausnehmung direkt benachbart zu einer zweiten Ausnehmung angeordnet, wobei die erste Ausnehmung jeweils in vertikaler Richtung beabstandet von der zweiten Ausnehmung angeordnet ist.

Die horizontale Richtung verläuft hierbei parallel zu den Haupterstreckungsebenen und steht auf der vertikalen Richtung senkrecht. Anders ausgedruckt, verlauft die horizontale Richtung von einer ersten Seitenfläche des Leitungshalters zu einer zweiten Seitenfläche des Leitungshalters, die der ersten Seitenfläche gegenüberliegt.

Gemäß einer weiteren Ausführungsform weist der Leitungshalter zwei gegenüberliegende Stirnseiten auf. Die Stirnseiten verlaufen hierbei bevorzugt von einer Seitenfläche des Leitungshalters zu anderen Seitenfläche des Leitungshalters.

Besonders bevorzugt ist an einer Stirnseite des Leitungshalters ein erstes Steckgesicht angeordnet. Weiterhin ist auch an der anderen Stirnseite des Leitungshalters bevorzugt ein zweites Steckgesicht angeordnet. Das erste Steckgesicht und das zweite Steckgesicht sind bevorzugt in das Verbindungsteil eingesteckt. Bevorzugt finden das erste Steckgesicht und das zweite Steckgesicht vollständig Aufnahme in dem Verbindungsteil. Das Verbindungsteil ist bevorzugt frei von Steckgesichtern.

Bevorzugt weist mindestens eines der Steckgesichter, bevorzugt das erste Steckgesicht, eine Dachfläche auf, die von der einen Seitenfläche des Leitungshalters zu der anderen Seitenfläche an der Oberseite des Leitungshalters verlauft. Die Dachfläche ist hierbei bevorzugt frei von Öffnungen und schließt einen Innenraum des Steckgesichts von der Oberseite des Leitungshalters bevorzugt ab. Hierbei ist der Innenraum des Steckgesichts bevorzugt von der Unterseite des Leitungshalters zugänglich.

Besonders bevorzugt handelt es sich bei den beiden Steckgesichtern um an den Leitungshalter angeformte Steckstrukturen. Das erste Steckgesicht und das zweite Steckgesicht können voneinander verschieden ausgebildet sein. Das erste Steckgesicht und/oder das zweite Steckgesicht sind besonders bevorzugt einstückig mit dem Leitungshalter ausgebildet und beispielsweise bei einem Spritzgussprozess zur Erzeugung des Leitungshalters gefertigt.

Gemäß einer weiteren Ausführungsform des Leitungshaltersystems sind Schlitze in Wänden des ersten Steckgesichts und/oder in Wänden des zweiten Steckgesichts vorgesehen. Die Schlitze verlaufen hierbei besonders bevorzugt entlang einer Haupterstreckungsrichtung der Ausnehmungen. Die Schlitze sorgen mit Vorteil für eine elektrische Isolierung und ermöglichen es so, die gesetzlich vorgegebene Luft- und Kriechstrecken einzuhalten.

Gemäß einer weiteren Ausführungsform umfasst der Leitungshalter an einem Endbereich der Oberseite einen Schnapphaken. Besonders bevorzugt ist bei dieser Ausführungsform an einem gegenüberliegenden Endbereich der Oberseite eine Aufnahme für den Schnapphaken vorgesehen. Der Schnapphaken ist besonders bevorzugt dazu geeignet, in die Aufnahme eingeschnappt zu werden.

Auf diese Art und Weise können gleichartig ausgebildete Leitungshalter, die mit einem Verbindungsteil mechanisch miteinander verbunden sind, fixiert werden.

Besonders bevorzugt ist die Aufnahme für den Schnapphaken an das eine Steckgesicht angeformt und der Schnapphaken an das andere Steckgesicht. Besonders bevorzugt sind der Schnapphaken und die Aufnahme für den Schnapphaken einstückig mit dem Leitungshalter ausgebildet.

Gemäß einer weiteren Ausführungsform des Leitungshalters weisen Wände der Ausnehmungen Durchbrüche auf. Die Durchbrüche durchdringen die Wände der Ausnehmungen hierbei besonders bevorzugt vollständig. Bevorzugt sind jeweils im Bereich eines Durchbruchs Nasen an den Innenseiten der Wand ausgebildet, die zur Befestigung der elektrischen Leitungen in den Ausnehmungen vorgesehen sind. Die Nasen sind bevorzugt an einer Innenfläche der Ausnehmung angeordnet und ragen in die Ausnehmung hinein. Die Durchbrüche weisen den Vorteil auf, ein besonders kostengünstiges Spritzgusswerkzeug zur Herstellung des Leitungshalters verwenden zu können, da Hinterschnitte vermieden werden können.

Gemäß einer weiteren Ausführungsform des Leitungshalters ist an einer Seitenfläche des Leitungshalters ein Justageelement angeordnet. Das Justageelement ist bevorzugt an den Leitungshalter angeformt. Beispielsweise ist das Justageelement als Wand ausgebildet. Bevorzugt ragt das Justageelement entlang der vertikalen Richtung über die Unterseite des Leitungshalters hinaus. Besonders bevorzugt ist die Seitenfläche des Leitungshalters, die dem Justageelement gegenüberliegt, frei von einem weiteren Justageelement.

Das Justageelement ist dazu vorgesehen und eingerichtet, das fehlerhafte Einstecken eines Funktionseinsatzes in ein Tragschienenelement, das den Leitungshalter umfasst, zu verhindern.

Beispielsweise weist der Leitungshalter eine Lange zwischen einschließlich 10 Zentimeter und einschließlich 150 Zentimeter auf. Die Breite des Leitungshalters kann beispielsweise zwischen einschließlich 5 Zentimeter und einschließlich 20 Zentimeter liegen. Die Hohe des Leitungshalters betragt beispielsweise zwischen einschließlich 1 Zentimeter und einschließlich 5 Zentimeter.

Gemäß einer Ausführungsform durchlaufen die Ausnehmungen des Verbindungsteils das Verbindungsteil vollständig von einer Stirnseite des Verbindungsteils zur gegenüberliegenden Stirnseite.

Erfindungsgemäß sind die Ausnehmungen des Verbindungsteils seitlich durch Stege begrenzt. Mit anderen Worten können Stege die Seitenflächen der Ausnehmungen des Verbindungsteils ausbilden. Beispielsweise verlaufen die Stege parallel zu Seitenflächen des Verbindungsteils. Besonders bevorzugt sind die Stege gleichartig ausgebildet und parallel zueinander angeordnet. Beispielsweise bilden die Stege eine kammartige Struktur aus.

Gemäß einer Ausführungsform weist das Verbindungsteil zumindest ein Stoppelement auf, an das zumindest ein Leitungshalter beim Einschieben in das Verbindungsteil anstößt. Das Stoppelement ist bevorzugt dazu vorgesehen, die Positionierung des Verbindungsteils beim Einsetzen des Verbindungsteils in das Leitungshaltersystem in Richtung der Haupterstreckungsebene der Leitungshalter festzulegen.

Das Stoppelement kann beispielsweise Teil eines der Stege des Verbindungsteils sein. Beispielsweise umfasst der Steg einen Bereich, der gegenüber dem restlichen Steg eine größere Dicke aufweist, und daher aus der Seitenfläche des Stegs herausragt und die Ausnehmung an dieser Stelle verengt. Bevorzugt ist das Stoppelement in einem zentralen Bereich des Verbindungsteils angeordnet.

Besonders bevorzugt weist jeder Steg ein Stoppelement auf. Bevorzugt sind die Stege mit den Stoppelementen gleichartig ausgebildet, so dass die Stoppelemente jeweils an der gleichen Stelle der Stege positioniert sind.

Beispielsweise grenzen die Leitungshalter mit ihren Stirnseiten jeweils zumindest teilweise an das Stoppelement an. Insbesondere grenzt der Teil der Stirnseite des Leitungshalters, der durch die Steckstrukturen des ersten Steckgesichts und/oder des zweiten Steckgesichts gebildet wird, direkt an das Stoppelement an. Besonders bevorzugt grenzen die beiden Leitungshalter in dem Verbindungsteil nicht direkt aneinander an, sondern sind zumindest teilweise durch das Stoppelement voneinander räumlich getrennt. Insbesondere sind besonders bevorzugt die Steckstrukturen der beiden Steckgesichter, die in dem Verbindungsteil angeordnet sind, entlang der Haupterstreckungsebene des Leitungshalters räumlich voneinander beabstandet angeordnet. Beispielsweise werden die Ausnehmungen, in denen die elektrischen Leitungen angeordnet werden innerhalb des Verbindungsteils zumindest teilweise lediglich durch die Stege des Verbindungsteils und/oder die Stoppelemente des Verbindungsteils seitlich begrenzt.

Weist das erste Steckgesicht eine Dachfläche auf, so können die Steckstrukturen gegenüber der Dachfläche zurückversetzt sein. Ist der Leitungshalter in das Verbindungsteil eingesetzt, so erstreckt sich die Dachfläche des ersten Steckgesichts bevorzugt über die Stoppelemente bis hin zu dem anderen Leitungshalter. Die Dachfläche kann hierbei teilweise mit dem zweiten Leitungshalter an der Oberseite überlappen.

Erfindungsgemäß weist das Verbindungsteil an einer Unterseite Spalte auf, die zwischen den Stegen angeordnet sind. Im montierten Zustand sind durch die Spalte elektrische Leitungen, die zwischen den Stegen des Verbindungsteils verlaufen, frei zuganglich. Bevorzugt verläuft jeder Spalt entlang einer Ausnehmung, so dass die Ausnehmung frei ist von einer Bodenfläche.

Gemäß einer Ausführungsform weist das Verbindungsteil an der Unterseite zwei Querstreben auf. Die Querstreben grenzen bevorzugt jeweils an eine der Stirnseiten des Verbindungsteils an. Beispielsweise bilden die Querstreben eine Kante des Verbindungsteils an der Unterseite aus. Die Querstreben verlaufen bevorzugt von einer Seitenfläche des Verbindungsteils zur gegenüberliegenden Seite des Verbindungsteils. Besonders bevorzugt verlaufen die Querstreben kontinuierlich von einer Seitenfläche des Verbindungsteils zur gegenüberliegenden Seite des Verbindungsteils. Die Querstreben verlaufen bevorzugt senkrecht zu den Ausnehmungen des Verbindungsteils und damit auch zu den Ausnehmungen der Leitungshalter in dem Leitungshaltersystem. Die Querstreben stabilisieren das Leitungshaltersystem mit Vorteil mechanisch, insbesondere gegen Verdrehungen.

Das hier beschriebene Verbindungsteil ist insbesondere dazu geeignet, in einem Leitungshaltersystem verwendet zu werden.

Tragschienenelement kann einen metallischen Kern aufweisen, der mit einer elektrisch isolierenden Beschichtung, wie etwa einer Lackierung, versehen ist.

Gemäß einer Ausführungsform umfasst das Stromschienenelement ein Leitungshaltersystem. Das Leitungshaltersystem ist bevorzugt innerhalb des Tragschienenelements angeordnet, beispielsweise in einer Kavität des Tragschienenelements. Zweckmäßigerweise weist das Tragschienenelement eine Länge auf, die in etwa einer Vielfachen der Länge eines Leitungshaltersystems entspricht. Eine Höhe des Tragschienenelements liegt beispielsweise zwischen einschließlich 5 Zentimeter und einschließlich 25 Zentimeter.

Die Haupterstreckungsebene des Leitungshaltersystems ist bevorzugt entlang der Montagewand des Tragschienenelements angeordnet. Hierbei weist die Oberseite des Leitungshaltersystems bevorzugt zur Montagewand und die Unterseite des Leitungshaltersystems zur Öffnung der Kavität des Tragschienenelements. Die Öffnungen der Ausnehmungen des Leitungshaltersystems weisen besonders bevorzugt in die vertikale Richtung. Auf diese Art und Weise können elektrische Leitungen, die in den Ausnehmungen positioniert sind, besonders einfach durch einen Funktionseinsatz abgegriffen werden.

In die Ausnehmungen des Leitungshaltersystems sind besonders bevorzugt elektrische Leitungen eingebracht. Insbesondere kann eine elektrische Leitung die Ausnehmungen der beiden Leitungshalter, die durch das Verbindungsteil miteinander verbunden sind, und die Ausnehmung des Verbindungsteils, die die beiden Ausnehmungen der Leitungshalter miteinander verbindet, kontinuierlich durchlaufen. Insbesondere ist es möglich, dass die Verwendung eines separaten Elements zur elektrischen Kontaktierung der elektrischen Leitungen der Leitungshalter nicht notwendig ist.

Bei den elektrischen Leitungen handelt es sich besonders bevorzugt um metallische Drähte, etwa aus Kupfer. Besonders bevorzugt sind die elektrischen Leitungen frei von einer isolierenden Ummantelung. Durch die oben beschriebene Anordnung der ersten Ausnehmungen und der zweiten Ausnehmungen ist es mit Vorteil möglich, in den Ausnehmungen elektrische Leitungen ohne elektrisch isolierende Ummantelung, also blanke Drähte, zu positionieren und hierbei die gesetzlichen Vorgaben hinsichtlich Luft- und Kriechstrecken einzuhalten. Die Verwendung von elektrischen Leitungen ohne Ummantelung weist den Vorteil auf, dass ein Schritt zur teilweisen Entfernung der Ummantelung um elektrische Kontaktstellen zur elektrischen Kontaktierung des Funktionseinsatzes zu schaffen, entfällt.

Es müssen nicht notwendigerweise in allen Ausnehmungen elektrische Leitungen eingebracht sein. Vielmehr ist es möglich, die Ausnehmungen je nach Anwendung mit einer gewünschten Anzahl an elektrischen Leitungen zu bestücken, wobei die maximale Anzahl der elektrischen Leitungen durch die Anzahl der Ausnehmungen vorgegeben ist.

Mit anderen Worten ist es mit Vorteil möglich, in den Ausnehmungen des Leitungshaltersystems eine flexible Anzahl an elektrischen Leitungen je nach Kundenanforderung vorzusehen. Lediglich die Maximalzahl der möglichen elektrischen Leitungen ist durch die Anzahl der Ausnehmungen vorgegeben. Eine Obergrenze für die Anzahl der Ausnehmungen liegt beispielsweise bei 25.

Besonders bevorzugt werden in die Ausnehmungen des Leitungshaltersystems nur so viele elektrische Leitungen eingesetzt wie für die Anwendung benötigt werden. Auf diese Art und Weise kann die Menge an benötigtem Material für die elektrischen Leitungen so niedrig wie möglich gehalten werden.

Das Stromschienenelement weist den Vorteil auf, dass ein elektrischer Abgriff über Funktionseinsätze an jeder Stelle des Stromschienenelements bis auf das Verbindungsteil erfolgen kann. Dies wird insbesondere durch die Anordnung von elektrischen Leitungen, die frei von einer isolierenden Ummantelung sind, ermöglicht.

Gemäß einer Ausführungsform weist das Stromschienenelement einen Funktionseinsatz auf, der ein elektrisches Abgriffelement aufweist, wobei das elektrische Abgriffelement parallel zur vertikalen Richtung angeordnet ist und in die Öffnungen der Ausnehmungen des Leitungshalters eingreift. Hierbei stellt das elektrische Abgriffelement bevorzugt einen elektrischen Kontakt zwischen den elektrischen Leitungen in den Ausnehmungen und dem Funktionseinsatz her.

Aufgrund der strukturellen Anordnung der einzelnen Elemente und Merkmale des Leitungshaltersystems und des Tragschienenelements ist es bei dem vorliegenden Stromschienenelement mit Vorteil möglich, dass das elektrische Abgriffelement des Funktionseinsatzes entgegen der vertikalen Richtung in das Tragschienenelement zur elektrischen Kontaktierung eingesetzt werden kann. Dies ermöglicht eine einfache Positionierung und Montage des Funktionseinsatzes.

Bei dem Funktionseinsatz handelt es sich besonders bevorzugt um einen Leuchteneinsatz, der eine Leuchte umfasst, die im Betrieb Licht von einer Lichtaustrittsfläche emittiert. Weiterhin ist es möglich, dass der Funktionseinsatz eines der folgenden Funktionselemente umfasst: Lautsprecher, Sensoren, Brandmelder, Bewegungsmelder.

Gemäß einer Ausführungsform des Stromschienenelements ist der Funktionseinsatz in das Stromschienenelement voreingebracht und dort vorpositioniert. Die genaue Position des Funktionseinsatzes kann durch den Kunden festgelegt werden. Der Funktionseinsatz kann dann mit Vorteil durch den Kunden mittels Druck in der ausgewählten Position in dem Stromschienenelement fixiert werden.

Gemäß einer weiteren Ausführungsform des Stromschienenelements ist an einer der Stirnseiten eines der Leitungshalter des Stromschienenelements ein Einspeiser angeordnet. Der Einspeiser ist dazu vorgesehen, an einer Stirnseite des gesamten Stromschienensystems angeordnet zu sein. Mit anderen Worten umfasst ein Stromschienensystem mit mehreren Stromschienen eine Stromschiene, deren Stirnseite die Stirnseite des gesamten Stromschienensystems bildet. An dieser Stirnseite ist bevorzugt der Einspeiser angeordnet.

Der Einspeiser dient zur Einspeisung von elektrischer Energie in die elektrischen Leitungen in den Ausnehmungen des Leitungshaltersystems. Besonders bevorzugt verbindet der Einspeiser externe elektrische Leitungen mit den elektrischen Leitungen in den Ausnehmungen des Leitungshaltersystems.

Gemäß einer weiteren Ausführungsform des Stromschienenelements umfasst der Einspeiser einen Schnapphaken, der gleichartig zu dem Schnapphaken an der Oberseite des Leitungshalters ausgebildet ist. Mit Vorteil kann der Einspeiser mit dem Schnapphaken in die Aufnahme des Leitungshalters für den Schnapphaken eingeklippst werden.

Gemäß einer weiteren Ausführungsform umfasst das Stromschienenelement eine Erdungsfeder. Die Erdungsfeder ist besonders bevorzugt zwischen der Montagewand und dem Leitungshaltersystem angeordnet. Die Erdungsfeder ist bevorzugt dazu vorgesehen, das Tragschienenelement zu erden.

Die Erdungsfeder weist bevorzugt einen ersten Kontaktierungsbereich auf, der dazu vorgesehen ist, mit dem Tragschienenelement elektrisch leitend verbunden zu werden. Beispielsweise ist der erste Kontaktierungsbereich als Arm ausgebildet, der aus einem Basiskörper der Erdungsfeder herausragt. Der erste Kontaktierungsbereich ist bevorzugt elektrisch leitend mit der Montagewand verbunden. Hierzu weist der Kontaktierungsbereich bevorzugt eine scharfkantige Kontur auf, die in die Montagewand eingreifen. Beispielsweise weist die scharfkantige Kontur Spitzen auf. Beispielsweise weist die Montagewand eine S-förmige Krümmung auf und die scharfkantige Kontur des ersten Kontaktierungsbereichs greift in einen Bauch der S-förmigen Krümmung ein.

Die Erdungsfeder kann weiterhin einen zweiten Kontaktierungsbereich aufweisen, der auch dazu vorgesehen ist, elektrisch leitend mit der Montagewand verbunden zu werden. Beispielsweise weist der zweite Kontaktierungsbereich eine Form auf, die achsensymmetrisch zu dem ersten Kontaktierungsbereich ausgebildet ist. Bevorzugt ist auch der zweite Kontaktierungsbereich als Arm ausgebildet, der aus dem Basiskörper herausragt. Bevorzugt erstrecken sich der Arm des ersten Kontaktierungsbereichs und der Arm des zweiten Kontaktierungsbereichs in die gleiche Richtung, bevorzugt entgegen der vertikalen Richtung. Der zweite Kontaktierungsbereich ist ebenfalls bevorzugt elektrisch leitend mit der Montagewand verbunden.

Hierzu weist der Kontaktierungsbereich bevorzugt eine scharfkantige Kontur, beispielsweise Spitzen, auf, die in die Montagewand eingreifen. Beispielsweise weist die Montagewand eine Krümmung auf, die spiegelsymmetrisch zu der S-Krümmung der Montagewand ausgebildet ist und die scharfkantige Kontur des zweiten Kontaktierungsbereichs greift in einen Bauch dieser Krümmung ein.

Weist das Tragschienenelement eine elektrisch isolierende Beschichtung, wie beispielsweise eine Lackierung auf, so durchdringt die scharfkantige Kontur des ersten Kontaktierungsbereichs und die scharfkantige Kontur des zweiten Kontaktierungsbereichs die Beschichtung bevorzugt und greifen in den darunterliegenden metallischen Kern ein, so dass bevorzugt eine elektrisch leitende Verbindung zwischen der Erdungsfeder und dem Tragschienenelement erzeugt wird.

Gemäß einer weiteren Ausführungsform weist die Erdungsfeder einen zentralen Bereich auf, der zwischen dem ersten Kontaktierungsbereich und dem zweiten Kontaktierungsbereich angeordnet ist und sich ebenfalls bevorzugt aus dem Basiskörper der Erdungsfeder entgegen der vertikalen Richtung heraus erstreckt. Bevorzugt steht der zentrale Bereich nicht in direktem Kontakt mit dem Tragschienenelement und stellt auch keine elektrisch leitende Verbindung mit dem Tragschienenelement her. Der zentrale Bereich dient mit Vorteil in der Regel der mechanischen Stabilisierung der Erdungsfeder.

Gemäß einer weiteren Ausführungsform weist die Erdungsfeder einen dritten Kontaktierungsbereich auf, der dazu vorgesehen ist, einen elektrischen Kontakt der Erdungsfeder zu einer der elektrischen Leitungen herzustellen. Beispielsweise weist die Erdungsfeder eine Öse als Kontaktierungsbereich auf, die eine der elektrischen Leitungen zumindest teilweise umschließt und mit der elektrischen Leitung elektrisch leitend verbunden ist. Die Öse steht hierbei bevorzugt mit der elektrischen Leitung in direktem physischem Kontakt, so dass eine elektrische Verbindung zwischen der Öse und der elektrischen Leitung hergestellt wird. Besonders bevorzugt ist die Öse nicht vollständig geschlossen und kann von oben auf die elektrische Leitung aufgesteckt werden.

Besonders bevorzugt sind sämtliche oben beschriebenen Elemente der Erdungsfeder einstückig ausgebildet. Beispielsweise handelt es sich bei der Erdungsfeder um ein metallisches Stanzelement, das mit Vorteil besonders einfach und kostengünstig hergestellt werden kann.

Gemäß einer weiteren Ausführungsform des Stromschienenelements ist einer der Leitungshalter mechanisch stabil mit einem elektrischen Verbindungselement verbunden. Das elektrische Verbindungselement ist dazu vorgesehen, eine elektrisch leitende Verbindung zwischen zwei direkt benachbarten Stromschienenelementen herzustellen. Das elektrische Verbindungselement ist besonders bevorzugt an einer Stirnseite des Leitungshalters angeordnet, der zu einer Stirnseite des Stromschienenelements weist. Besonders bevorzugt ist das elektrische Verbindungselement dazu vorgesehen, mit dem Leitungshalter eines weiteren Stromschienenelements mechanisch stabil verbunden zu werden. Hierbei werden bevorzugt die elektrischen Leitungen in dem einen Leitungshalter mit den elektrischen Leitungen des anderen Leitungshalters elektrisch leitend miteinander verbunden.

Beispielsweise weist das elektrische Verbindungselement das erste Steckgesicht an der einen Stirnseite und das zweite Steckgesicht an der anderen Stirnseite auf. Hierbei sind das erste Steckgesicht und das zweite Steckgesicht bevorzugt dazu geeignet mechanisch stabil ineinander gesteckt zu werden. So können das erste Steckgesicht des elektrischen Verbindungselements mit dem zweiten Steckgesicht des einen Leitungshalters und das zweite Steckgesicht des elektrischen Verbindungselements mit dem ersten Steckgesicht des anderen Leitungshalters mechanisch verbunden werden. Hierbei sind die beiden Steckgesichter bevorzugt derart ausgebildet, dass das erste Steckgesicht des Leitungshalters mit einer gesamten Länge in das zweite Steckgesicht des elektrischen Verbindungselements eingesetzt werden kann oder dass das zweite Steckgesicht des Leitungshalters mit einer gesamten Länge in das erste Steckgesicht des elektrischen Verbindungselements eingesetzt werden kann. So können sich die Leitungshalter bei erhöhten Temperaturen entsprechend ausdehnen.

Bevorzugt weist das elektrische Verbindungselement an einer Oberseite ebenfalls den Schnapphaken und die Aufnahme für den Schnapphaken auf. Der Schnapphaken und die Aufnahme für den Schnapphaken sind bevorzugt gleichartig ausgebildet, wie der Schnapphaken und die Aufnahme des Schnapphakens auf der Oberseite der Leitungshalter. Auf diese Art und Weise kann die mechanische Verbindung des elektrischen Verbindungselements mit den beiden Leitungshaltern über die Schnapphaken mechanisch fixiert werden.

Gemäß einer weiteren Ausführungsform des Stromschienenelements weist das Tragschienenelement ein Winkelelement auf. Das Winkelelement ist bevorzugt an einer Innenfläche der Montagewand angebracht, bevorzugt mittig in Bezug auf die Seitenfläche des Tragschienenelements. Das Winkelelement kann beispielsweise durch Clinchen befestigt werden. Besonders bevorzugt weist das Winkelelement ein Fenster auf. Besonders bevorzugt umfasst das Stromschienenelement bei dieser Ausführungsform ein mechanisches Verbindungselement. Das Verbindungselement weist bevorzugt ein Rastelement auf, das in das Fenster eingreift.

Gemäß einer Ausführungsform des mechanischen Verbindungselements umfasst das mechanische Verbindungselement zwei Seitenteile und eine Verbindungswand, die zwischen den Seitenteilen angeordnet ist. An einer Außenfläche der Verbindungswand ist mindestens ein Rastelement angeordnet, das dazu vorgesehen ist, in das Winkelelement des Tragschienenelements einzugreifen.

Die Verbindungswand weist bevorzugt eine geringere Ausdehnung in einer Haupterstreckungsebene auf als die beiden Seitenteile, so dass jedes Seitenteil über die Verbindungswand hinausragt. Bevorzugt ist die Verbindungswand mittig zwischen den Seitenteilen angeordnet, so dass die Seitenteile symmetrisch zu beiden Seiten über die Verbindungswand hinausragen. Weist die Verbindungswand eine geringere Fläche auf als die Seitenteile, so kann das Stromschienenelement mit Vorteil mit einem geringeren Gewicht ausgebildet werden. Außerdem ist so eine Kante der Verbindungswand zurückversetzt zu den Seitenteilen des mechanischen Verbindungselements angeordnet, die zur Positionierung bei der Verbindung mit einem weiteren Stromschienenelement dient.

Gemäß einer weiteren Ausführungsform weist das mechanische Verbindungselement Vorführungen auf, die jeweils an der Oberkante der Seitenteile angeordnet sind. Bevorzugt ragen die Vorführungen über die Seitenteile in einer Haupterstreckungsrichtung des mechanischen Verbindungselements hinaus. Die Vorführungen können beispielsweise als Streben ausgebildet sein, die jeweils aus der Stirnseite des Stromschienenelements herausragen.

Das Rastelement ist beispielsweise Teil einer Feder. Beispielsweise ist das Rastelement in einem Endbereich der Feder angeordnet. In dem gegenüberliegenden Endbereich kann ein weiteres Rastelement angeordnet sein. Jedes der Rastelemente kann beispielsweise als Winkel ausgebildet sein, der mit seiner Kante aus der Feder herausragt und dazu vorgesehen ist, zur Montagewand des Tragschienenelements zu weisen.

Bevorzugt sind die beiden gegenüberliegenden Rastelemente der Feder unterschiedlich ausgebildet. Beispielsweise sind die Rastelemente beide als spitzer Winkel ausgebildet, wobei die Werte der beiden Winkel unterschiedlich sind. Beispielsweise weist der eine Winkel einen Wert zwischen einschließlich 10° und einschließlich 30° auf, während der andere Winkel einen Wert zwischen einschließlich 40° und einschließlich 90° aufweist.

Weiterhin kann die Feder in einem Endbereich geschwächt sein, beispielsweise indem eine Aussparung in dem Endbereich vorgesehen ist.

Gemäß einer weiteren Ausführungsform weist das mechanische Verbindungselement Krallen auf, die dazu vorgesehen sind, in das Tragschienenelement einzugreifen, eine eventuelle vorhandene Lackierung des Tragschienenelements zu durchstoßen und das mechanische Verbindungselement so elektrisch zu erden. Beispielsweise sind die Krallen Teil der Feder. Die Krallen können an einer Seite oder an beiden Seiten der Feder herausragen und seitlich in das Tragschienenelement eingreifen.

Das mechanische Verbindungselement ist insbesondere dazu geeignet, Teil eines Stromschienenelements beziehungsweise eines Stromschienensystems zu sein. Merkmale und Ausführungen, die vorliegend lediglich in Verbindung mit dem Stromschienenelement oder dem Stromschienensystem beschrieben sind, können auch bei dem mechanischen Verbindungselement ausgebildet sein und umgekehrt.

Das mechanische Verbindungselement ist dazu vorgesehen, das Stromschienenelement mit einem weiteren Stromschienenelement mechanisch einfach verbinden und wieder lösen zu können. Beim Lösen des Stromschienenelements wird insbesondere mit Vorteil kein separates Werkzeug benötigt.

Gemäß einer Ausführungsform der Stromschiene ist das mechanische Verbindungselement mit dem Rastelement, das dem Rastelement des geschwächten Endbereichs gegenüberliegt, in das Fenster des Winkelelements an der Innenfläche der Montagewand des Tragschienenelements eingerastet. Die Vorführungen des mechanischen Verbindungselements ragen hierbei bevorzugt an einer der Stirnseiten des Stromschienenelements heraus. Die Vorführungen sind dazu vorgesehen, in ein weiteres gleichartig ausgebildetes Stromschienenelement stirnseitig einzugreifen und eine Positionierung bei dem Zusammenfügen der beiden Stromschienenelemente zu erlauben.

Bevorzugt weist das Winkelelement neben dem Fenster einen Anschlag auf. Der Anschlag ragt bevorzugt aus einer Haupterstreckungsebene des Winkelelements heraus. Bei dem Zusammenfügen der beiden Stromschienenelemente wird das eine Stromschienenelement mit den Vorführungen bevorzugt in die Stirnseite des anderen Stromschienenelements eingeschoben, bis die Kante der Verbindungswand auf den Anschlag des Winkelelements des anderen Stromschienenelements trifft. Der Anschlag und das Fenster sind derart angeordnet und ausgebildet, dass das Rastelement des mechanischen Verbindungselements in dieser Position in das Fenster des anderen Stromschienenelements eingreift. Hierbei wird bevorzugt das Rastelement an dem geschwächten Endbereich der Feder des einen Stromschienenelements mit dem Fenster des anderen Stromschienenelements verbunden. Die mechanische Verbindung zwischen den beiden Stromschienenelementen ist besonders bevorzugt reversibel ausgebildet. Beispielsweise kann die mechanische Verbindung zwischen den beiden Stromschienenelementen durch Lösen des Rastelements an dem geschwächten Endbereich aus dem Fenster wieder gelöst werden. Besonders bevorzugt wird hierzu kein zusätzliches Werkzeug benötigt. Da der Endbereich geschwächt ist, und aufgrund der oben beschriebenen Winkel der beiden Rastelemente, ist es mit Vorteil möglich, dass sich das mechanische Verbindungselement bevorzugt von dem hinzugefügten Stromschienenelement löst und nicht von dem Stromschienenelement, an das er ursprünglich montiert war.

Gemäß einer weiteren Ausführungsform des Stromschienenelements weist das mechanische Verbindungselement Ausbuchtungen an den Seitenteilen auf. Die Ausbuchtungen stehen bevorzugt mit den Seitenwänden des Tragschienenelements in direktem Kontakt. Auf diese Art und Weise kann die Positionierung von mechanischem Verbindungselement und Tragschienenelement zueinander gehalten werden.

Das hier beschriebene Stromschienenelement ist insbesondere dafür geeignet, Teil eines Stromschienensystems zu sein. Beispielsweise kann ein Stromschienensystem mindestens zwei ineinandergefügte Stromschienenelemente aufweisen oder aus zwei ineinandergefügten Stromschienenelementen bestehen. Merkmale und Ausführungen, die vorliegend in Verbindung mit dem Stromschienenelement, dem Leitungshalter und dem mechanischen Verbindungselement beschrieben sind, können auch bei dem Stromschienensystem ausgebildet sein und jeweils umgekehrt. Das Stromschienensystem weist beispielsweise eine Länge von ungefähr 1,5 Meter, von ungefähr 3 Meter oder von ungefähr 4,5 Meter auf.

Bei einer Ausführungsform eines Verfahrens zur Herstellung eines Stromschienenelements wird ein Leitungshaltersystem bereitgestellt.

Gemäß einer weiteren Ausführungsform des Verfahrens wird ein Winkelelement an jeweils einem Endbereich einer Innenfläche der Montagewand eines Tragschienenelements befestigt. Das Winkelelement weist besonders bevorzugt einen Anschlag auf.

Gemäß einer weiteren Ausführungsform des Verfahrens wird ein mechanisches Verbindungselement in das Tragschienenelement eingesteckt, bis die Kante des Verbindungselements an den Anschlag des Winkelelements anstößt. Das Winkelelement ist bevorzugt Teil einer Feder. Stößt die Kante des Verbindungselements an den Anschlag des Winkelelements an, rastet bevorzugt ein Rastelement des mechanischen Verbindungselements in ein Fenster des Winkelelements ein.

Gemäß einer weiteren Ausführungsform des Verfahrens wird das Leitungshaltersystem an der Innenfläche der Montagewand des Tragschienenelements befestigt. Hierzu sind an einer Oberseite des Leitungshaltersystems bevorzugt Befestigungselemente, wie beispielsweise Rasthaken, vorgesehen.

Hierbei ist es möglich, dass das Leitungshaltersystem vor oder nach dem Einstecken des mechanischen Verbindungselements in das Tragschienenelement bis zu einem Anschlag des Winkelelements an der Innenfläche der Montagewand des Tragschienensystems befestigt wird. Folglich kann das mechanische Verbindungselement vormontiert an den Kunden geliefert werden oder von diesem nachträglich in das Stromschienenelement eingesetzt werden.

Merkmale und Ausführungsformen, die vorliegend lediglich in Verbindung mit dem Verfahren zur Herstellung eines Stromschienenelements beschrieben sind, können auch bei dem Stromschienenelement ausgebildet sein und umgekehrt.

Vorliegend sind die Stromschienenelemente insbesondere dazu geeignet, miteinander zu einem Stromschienensystem verbunden zu werden. Hierbei werden beispielsweise die Vorführungen des mechanischen Verbindungselements ineinander gesteckt und eingerastet wie oben beschrieben.

Weitere vorteilhafte Ausführungsformen und Weiterbildungen der Erfindung ergeben sich aus den im Folgenden in Verbindung mit den Figuren beschriebenen Ausführungsbeispielen.

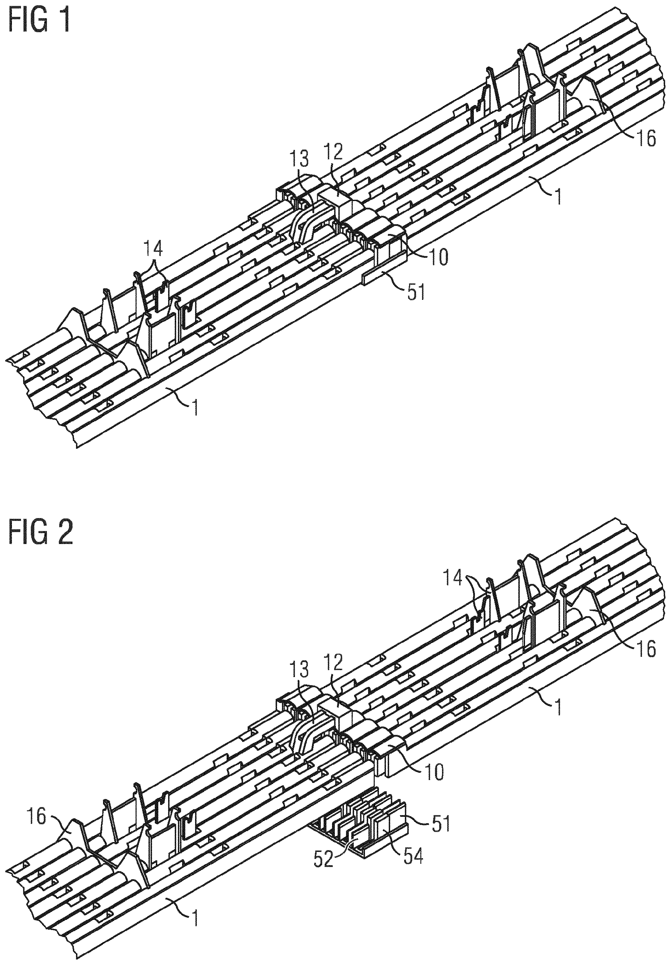

Die schematischen perspektivischen Darstellungen der Figuren 1 bis 14 zeigen Leitungshaltersysteme oder Ausschnitte von Leitungshaltersystemen gemäß verschiedenen Ausführungsbeispielen.

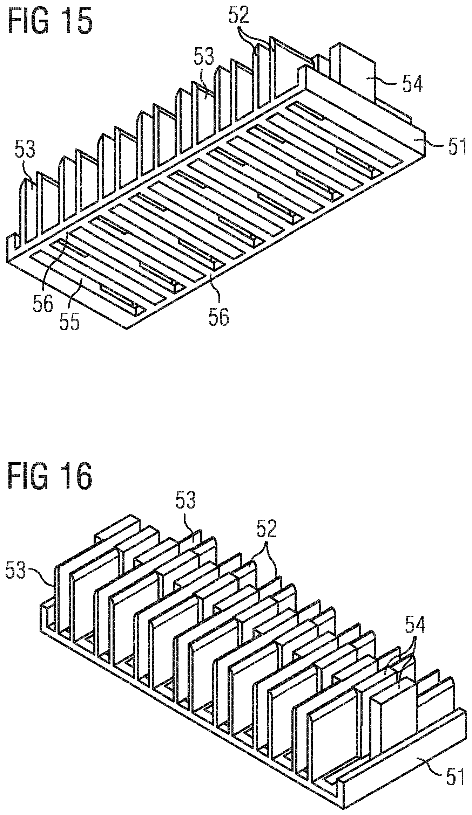

Die schematischen perspektivischen Darstellungen der Figuren 15 und 16 zeigen ein Verbindungsteil gemäß einem Ausführungsbeispiel.

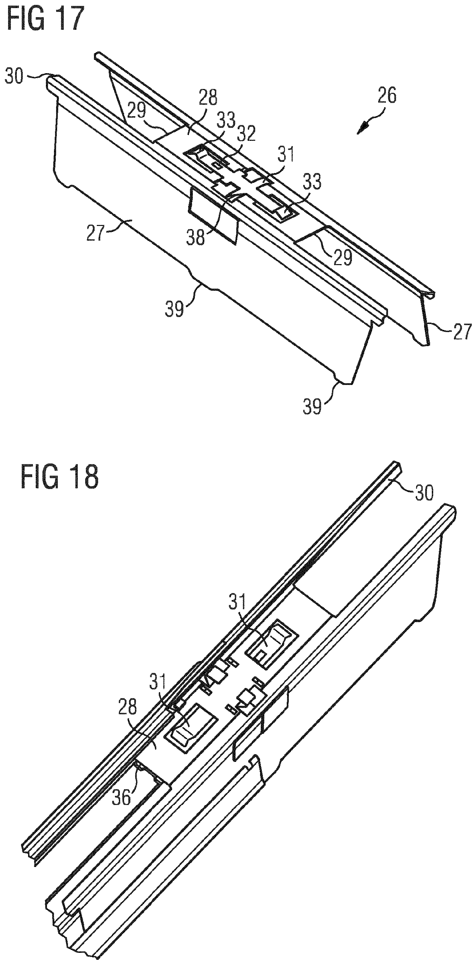

Die schematische perspektivische Darstellung der Figur 17 zeigt ein mechanisches Verbindungselement gemäß einem Ausführungsbeispiel.

Anhand der schematischen perspektivischen Darstellungen der Figuren 18 bis 19 wird ein Verfahren zur Herstellung eines Stromschienenelements näher erläutert.

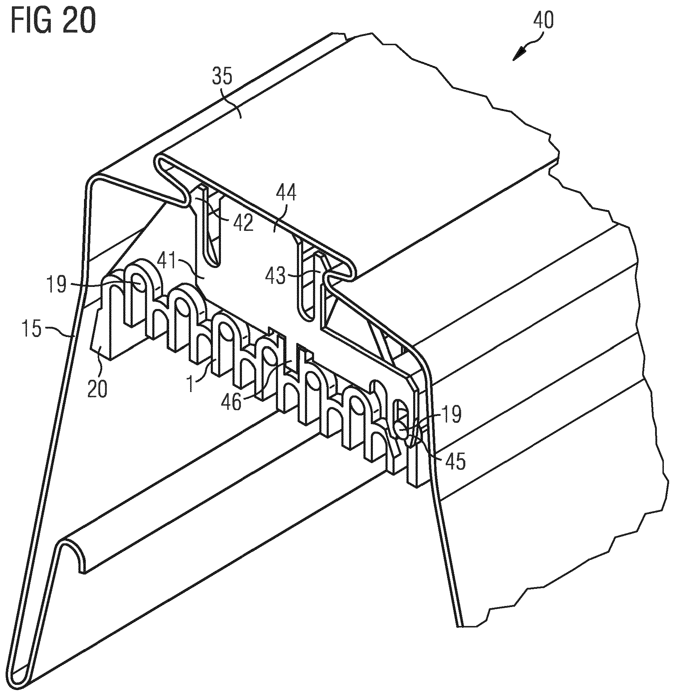

Die schematischen perspektivischen Darstellungen der Figuren 20 bis 22 zeigen ein Stromschienenelement gemäß einem Ausführungsbeispiel.

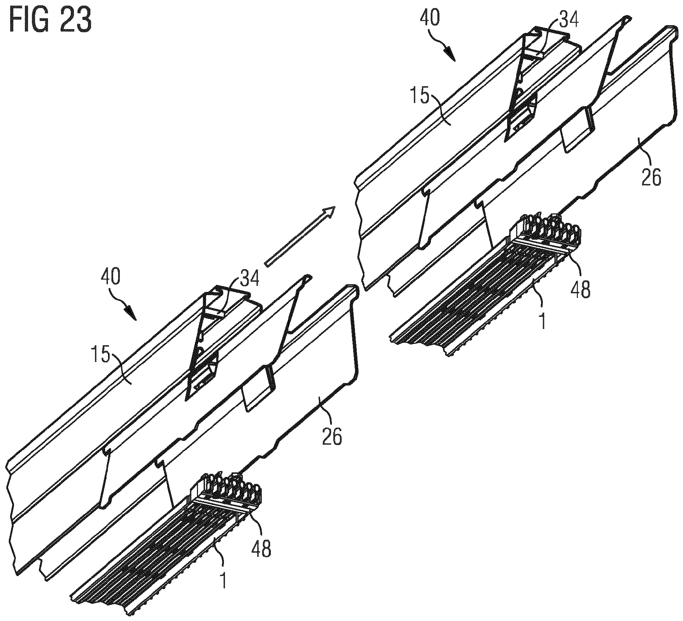

Anhand der Figuren 23 bis 28 wird ein Verfahren zur Herstellung eines Stromschienensystems näher erläutert.

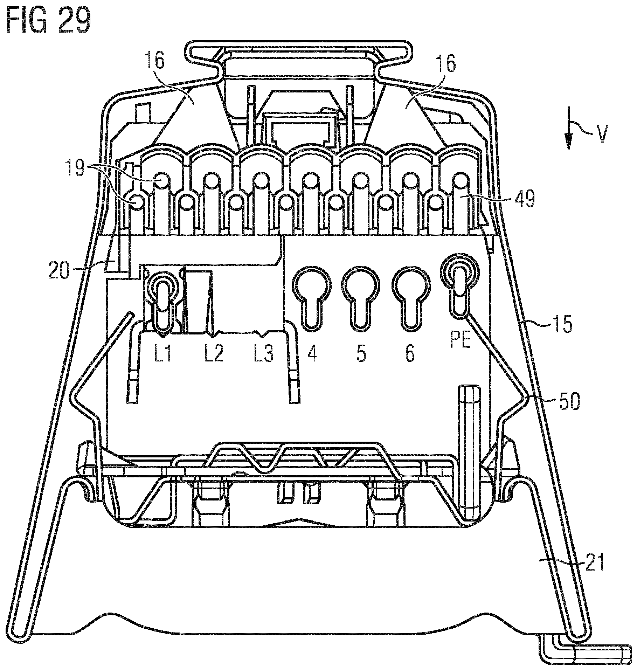

Figur 29 zeigt eine schematische Darstellung eines Stromschienensystems.

Gleiche, gleichartige oder gleich wirkende Elemente sind in den Figuren mit denselben Bezugszeichen versehen. Die Figuren und die Größenverhältnisse der in den Figuren dargestellten Elemente untereinander sind nicht als maßstäblich zu betrachten. Vielmehr können einzelne Elemente, insbesondere Schichtdicken, zur besseren Darstellbarkeit und/oder zum besseren Verständnis übertrieben groß dargestellt sein.

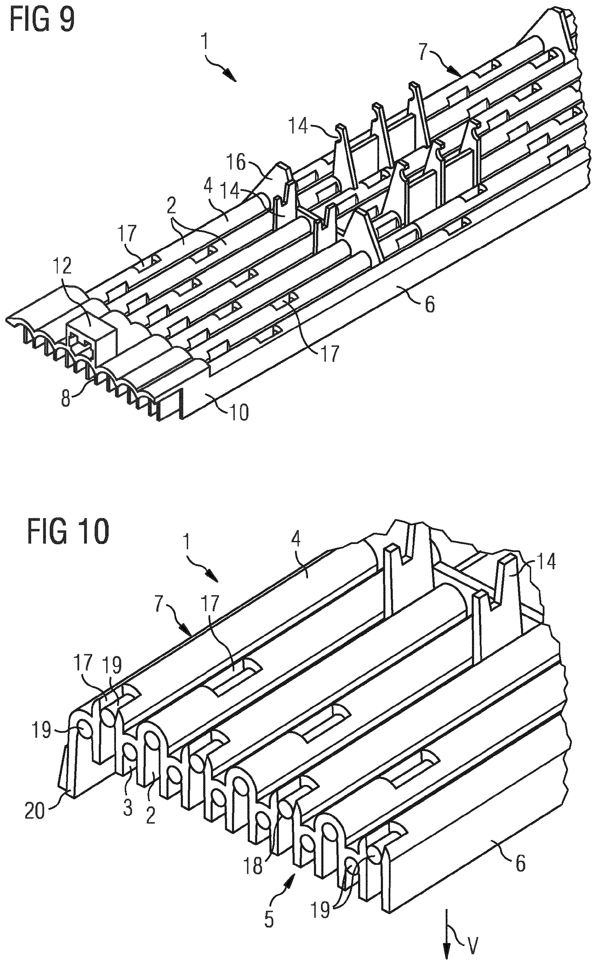

Das Leitungshaltersystem gemäß dem Ausführungsbeispiel der Figur 1 weist zwei Leitungshalter 1 auf, die durch ein Verbindungsteil 51 mechanisch miteinander verbunden sind. Die Leitungshalter 1 sind hierbei gleichartig ausgebildet. Jeder Leitungshalter 1 weist an einer Stirnseite 8 ein erstes Steckgesicht 10 und an einer gegenüberliegenden Stirnseite 9 ein zweites Steckgesicht 11 auf. Die Steckgesichter 10, 11 werden etwa in Verbindung mit den Figuren 9 und 11 bis 13 näher erläutert.

Das erste Steckgesicht 10 des einen Leitungshalters 1 und das zweite Steckgesicht 11 des anderen Leitungshalters 1 sind hierbei vollständig in das Verbindungsteil 51 eingebracht. Weiterhin weist der eine Leitungshalter 1 an einer Oberseite des zweiten Steckgesichts 11 einen Schnapphaken 13 auf, der in eine Aufnahme 12 auf dem ersten Steckgesicht 10 des anderen Leitungshalters 1 eingeschnappt ist. An der Oberseite 4 der Leitungshalter 1 sind außerdem Befestigungselemente 14 und Positionierhilfen 16 angeordnet.

Figur 2 zeigt das Leitungshaltersystem gemäß dem Ausführungsbeispiel der Figur 1, wobei das Verbindungsteil 51 aus dem Leitungshaltersystem zur besseren Übersichtlichkeit gelöst dargestellt ist. Das Verbindungsteil 51 weist parallel zueinander angeordnete Stege 52 auf, die eine Vielzahl an Ausnehmungen 53 begrenzen. Die Ausnehmungen 53 sind dazu vorgesehen, Ausnehmungen 2, 3 der beiden Leitungshalter 1 fortzusetzen und elektrische Leitungen 19 aufzunehmen. Weiterhin weist jeder Steg 52 ein Stoppelement 54 auf.

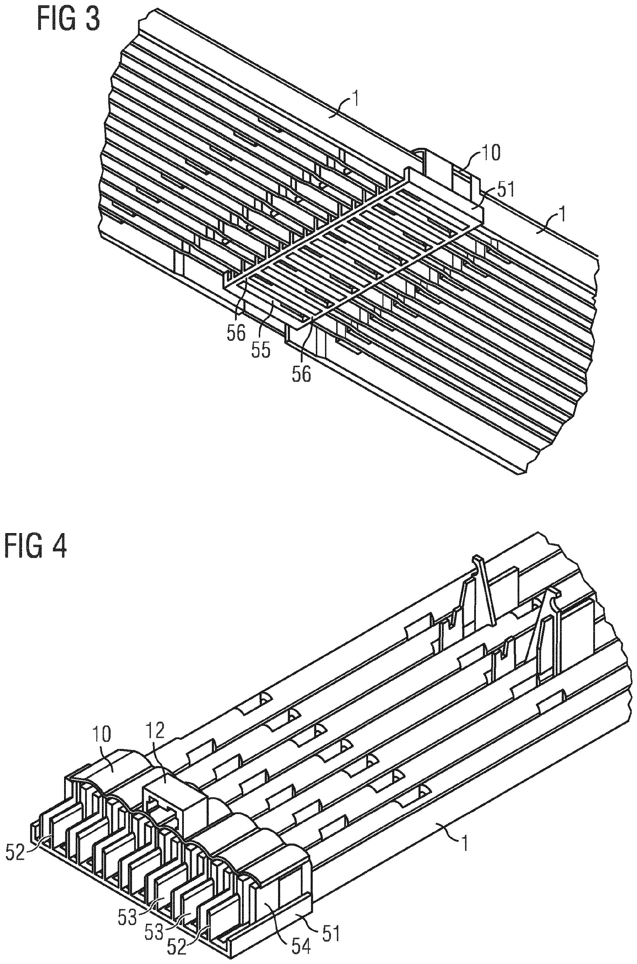

Figur 3 zeigt ein Leitungshaltersystem gemäß einem Ausführungsbeispiel von einer Unterseite 5 der Leitungshalter 1 her. Das Verbindungsteil 51 des Leitungshaltersystems weist Spalte 55 auf, die durch die Stege 52 begrenzt sind. Durch die Spalte 55 sind die Ausnehmungen 53 des Verbindungsteils 51 und auch die Ausnehmungen 2, 3 der beiden Leitungshalter 1 von der Unterseite 5 her zugänglich. Weiterhin weist das Verbindungsteil 51 zwei Querstreben 56 auf, die senkrecht zu den Ausnehmungen 53 angeordnet sind und kontinuierlich von einer Seitenfläche des Verbindungsteils 51 zur anderen Seitenfläche verlaufen.

Figur 4 zeigt zur näheren Erläuterung ein Leitungshaltersystem, bei dem nur ein Leitungshalter 1 dargestellt ist, der in das Verbindungsteil 51 eingesteckt ist. Der Leitungshalter 1 ist mit dem ersten Steckgesicht 10 bis zu einem Stoppelement 54 in das Verbindungsteil 51 eingebracht. Hierbei findet das erste Steckgesicht 10 in einer Haupterstreckungsrichtung des Leitungshalters 1 vollständig Aufnahme in dem Verbindungsteil 51. Das Verbindungsteil 51 weist vorliegend eine Vielzahl an Stoppelementen 54 auf. Jedes Stoppelement 54 ist in einen der Stege 52 integriert.

Das erste Steckgesicht 10 weist Steckstrukturen auf, die stirnseitig an die Stoppelemente 54 angrenzen. Außerdem umfasst das erste Steckgesicht 10 eine Dachfläche, gegenüber der die Steckstrukturen des ersten Steckgesichts 10 zurückversetzt angeordnet sind. Die Dachfläche überdeckt vorliegend die Stoppelemente 54 an einer Oberseite des Leitungshalters.

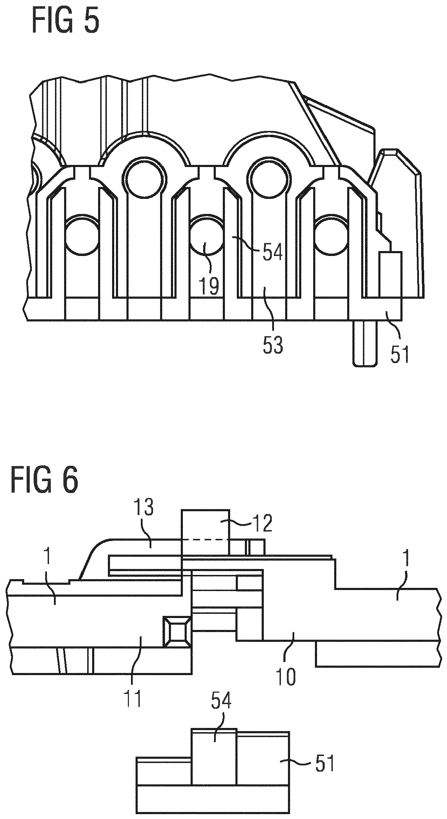

Die schematische Darstellung der Figur 5 zeigt eine Schnittansicht eines Leitungshaltersystems gemäß einem Ausführungsbeispiel. Das Verbindungsteil 51 weist hierbei Stoppelemente 54 auf, die in die Stege 52 integriert sind und an die Wände der Ausnehmungen 53 direkt angrenzen. In den Ausnehmungen 2, 3, 53 des Leitungshaltersystems sind elektrische Leitungen 19 angeordnet.

Figur 6 illustriert die Positionierung des Verbindungsteils 51 zwischen den beiden Leitungshaltern 1 eines Leitungshaltersystems. Das Verbindungsteil 51 wird von den Unterseiten 5 der beiden Leitungshalter 1 her an ihren Stirnseiten eingesetzt. Hierbei stoßen die beiden Leitungshalter 1 innerhalb des Verbindungsteils 51 an die Stoppelemente 54 an. Die Ausnehmungen 2, 3 der Leitungshalter 1 werden durch Ausnehmungen 53 in dem Verbindungsteil 51 fortgesetzt, die teilweise lediglich durch die Stoppelemente 54 seitlich begrenzt werden. Die Steckstrukturen der Steckgesichter 10, 11 der beiden Leitungshalter 1 sind beabstandet voneinander in dem Verbindungsteil 51 angeordnet. Die Dachfläche des ersten Steckgesichts 10 liegt auf der Oberseite des gegenüber liegenden Leitungshalters 1 in einem kleinen Bereich auf. Der eine Leitungshalter 1 ist mit einem Schnapphaken 13 auf dem zweiten Steckgesicht 11 versehen, der mit der Aufnahme 12 auf dem ersten Steckgesicht 10 des anderen Leitungshalters 1 mechanisch fest verbunden ist.

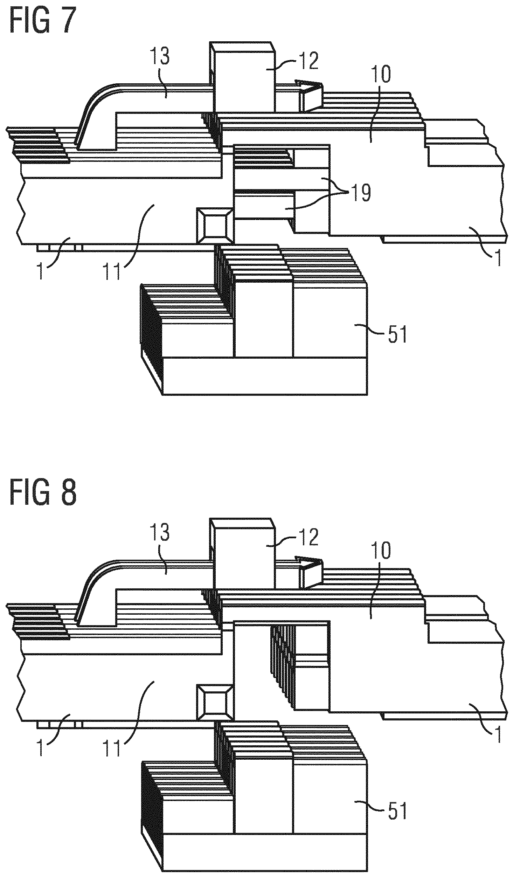

Figur 7 zeigt eine schematische perspektivische Darstellung des Leitungshaltersystems gemäß dem Ausführungsbeispiel der Figur 6. Hierbei sind die Ausnehmungen 53 sichtbar, die in dem Verbindungsteil 51 gebildet sind, und die Ausnehmungen 2, 3 des einen Leitungshalters 1 mit den Ausnehmungen 2, 3 des anderen Leitungshalters 1 durchgehend verbinden. In den Ausnehmungen 2, 3, 53 sind elektrische Leitungen 19 eingebracht. Die schematische perspektivische Darstellung 8 zeigt die Darstellung der Figur 7 ohne die elektrischen Leitungen 19. Die Ausnehmungen 53 des Verbindungsteils 51 sind in dem Bereich, in dem sie seitlich durch die Stoppelemente 54 begrenzt werden, frei von Elementen der beiden Leitungshalter 1. Die Dachfläche des ersten Steckgesichts 10 erstreckt sich über die Ausnehmungen 53 des Verbindungsteils 51 und schließt die Ausnehmungen 53 oberseitig ab.

Der Leitungshalter 1 des Leitungshaltersystems gemäß dem Ausführungsbeispiel der Figur 9 weist eine Vielzahl von ersten Ausnehmungen 2 auf, die parallel zueinander in einer gemeinsamen ersten Haupterstreckungsebene angeordnet sind.

Weiterhin weist der Leitungshalter 1 eine Vielzahl zweiter Ausnehmungen 3 auf, die ebenfalls in einer gemeinsamen zweiten Haupterstreckungsebene angeordnet sind, wobei die erste Haupterstreckungsebene und die zweite Haupterstreckungsebene parallel zueinander verlaufen, aber voneinander verschieden sind. Die erste Haupterstreckungsebene der ersten Ausnehmungen 2 und die zweite Haupterstreckungsebene der zweiten Ausnehmungen 3 zusammen mit den ersten Ausnehmungen 2 und den zweiten Ausnehmungen 3 werden weiter unten, insbesondere in Verbindung mit Figur 10, näher erläutert.

Der Leitungshalter 1 gemäß der Figur 9 weist eine Oberseite 4 auf und eine Unterseite 5, die der Oberseite 4 gegenüberliegt. Außerdem weist der Leitungshalter 1 zwei einander gegenüberliegende Seitenflächen 6, 7 auf, die sich entlang der ersten Haupterstreckungsebene der ersten Ausnehmungen 2 und entlang der zweiten Haupterstreckungsebene der zweiten Ausnehmungen 3 erstrecken und auf der Oberseite 4 und der Unterseite 5 des Leitungshalters 1 senkrecht stehen. Außerdem umfasst der Leitungshalter 1 zwei Stirnseiten 8, 9, die den Leitungshalter 1 an seinen Endbereichen begrenzen. An einer der Stirnseiten 8 des Leitungshalters 1 ist ein erstes Steckgesicht 10 angeordnet. Das erste Steckgesicht 10 weist eine Steckstruktur und eine Dachfläche auf..

Auf einer Oberseite des ersten Steckgesichts 10 ist eine Aufnahme 12 angeordnet, die dazu geeignet ist, einen Schnapphaken 13 aufzunehmen. Weiterhin sind an der Oberseite 4 des Leitungshalters 1 Befestigungselemente 14 angeordnet, die als Rasthaken ausgebildet sind. Die Rasthaken sind dazu vorgesehen, in Ausnehmungen eines Tragschienenelements 15 befestigt zu werden. Zudem sind an der Oberseite 4 des Leitungshalters 1 Positionierhilfen 16 angeordnet, die dazu dienen, die Höhe des Leitungshalters 1 innerhalb des Tragschienenelements 15 bei der Montage festzulegen.

Der Leitungshalter 1 des Leitungshaltersystems gemäß dem Ausführungsbeispiel der Figur 9 ist bevorzugt einstückig als Spritzgussteil ausgebildet.

Wände der Ausnehmungen 2, 3 des Leitungshalters 1 weisen Durchbrüche 17 auf, die die Verwendung eines Spritzgusswerkzeugs ermöglichen, mit dem Nasen 18 an der Innenfläche der Durchbrüche 17 zur Befestigung von elektrischen Leitungen 19 in den Ausnehmungen 2, 3 des Leitungshalters 1 gefertigt werden können. Dies wird weiter unten beispielsweise anhand Figur 10 näher erläutert.

Figur 10 zeigt perspektivisch einen weiteren Ausschnitt des Leitungshalters 1 gemäß der Figur 9, wobei das erste Steckgesicht 10 vorliegend nicht dargestellt ist, sodass die Ausnehmungen 2, 3 des Leitungshalters 1 besser erkennbar sind.

Die erste Haupterstreckungsebene der ersten Ausnehmungen ist in einer vertikalen Richtung v, die von der Oberseite 4 des Leitungshalters 1 zu seiner Unterseite 5 verläuft, von der zweiten Haupterstreckungsebene beabstandet angeordnet, sodass die ersten Ausnehmungen 2 in der ersten Haupterstreckungsebene näher an der Oberseite 4 des Leitungshalters 1 angeordnet sind als die zweiten Ausnehmungen 3 in der zweiten Haupterstreckungsebene. Die ersten Ausnehmungen 2 des Leitungshalters 1 in der ersten Haupterstreckungsebene und die zweiten Ausnehmungen 3 in der zweiten Haupterstreckungsebene sind vorliegend alternierend angeordnet. Mit anderen Worten ist jeweils eine erste Ausnehmung 2 direkt benachbart zu einer zweiten Ausnehmung 3 angeordnet.

In den Ausnehmungen 2, 3 sind vorliegend elektrische Leitungen 19, beispielsweise blanke Kupferdrähte, eingebracht. Aufgrund der ersten Ausnehmungen 2 und der zweiten Ausnehmungen 3, deren Wände aus einem elektrisch isolierenden Material, wie einem Kunststoff, gebildet sind, sind die elektrischen Leitungen 19 voneinander elektrisch isoliert. Da die ersten Ausnehmungen 2 und die zweiten Ausnehmungen 3 einen Abstand in der vertikalen Richtung v zueinander aufweisen, ist es möglich, Luft- und Kriechstrecken, die beispielsweise gesetzlich durch DIN-Normen vorgegeben sein können, einzuhalten.

Die Wände der Ausnehmungen 2, 3 weisen weiterhin die Durchbrüche 17 auf, die die Wand jeweils vollständig durchdringen. Mit anderen Worten sind bei dem vorliegenden Ausführungsbeispiel die elektrischen Leitungen 19, die innerhalb der Ausnehmungen 2, 3 angeordnet sind, durch die Durchbrüche 17 von der Oberseite 4 frei zugänglich. Weiterhin weisen die Ausnehmungen 2, 3 die Nasen 18 auf, die an der Innenfläche der Wand im Bereich der Durchbrüche 17 angeordnet sind. Die Nasen 18 dienen zur Halterung der elektrischen Leitungen 19 in den Ausnehmungen 2, 3. Aufgrund der Durchbrüche 17 können die Nasen 18 mit Hilfe eines Spritzgusswerkzeugs gefertigt werden, das keine Hinterschnitte aufweist.

An einer Seitenfläche 7 des Leitungshalters 1 ist ein Justageelement 20 angeordnet, das in der vertikalen Richtung v verläuft und dazu geeignet ist, eine falsche Montage eines Funktionseinsatzes 21 in den Leitungshalter 1 zu verhindern.

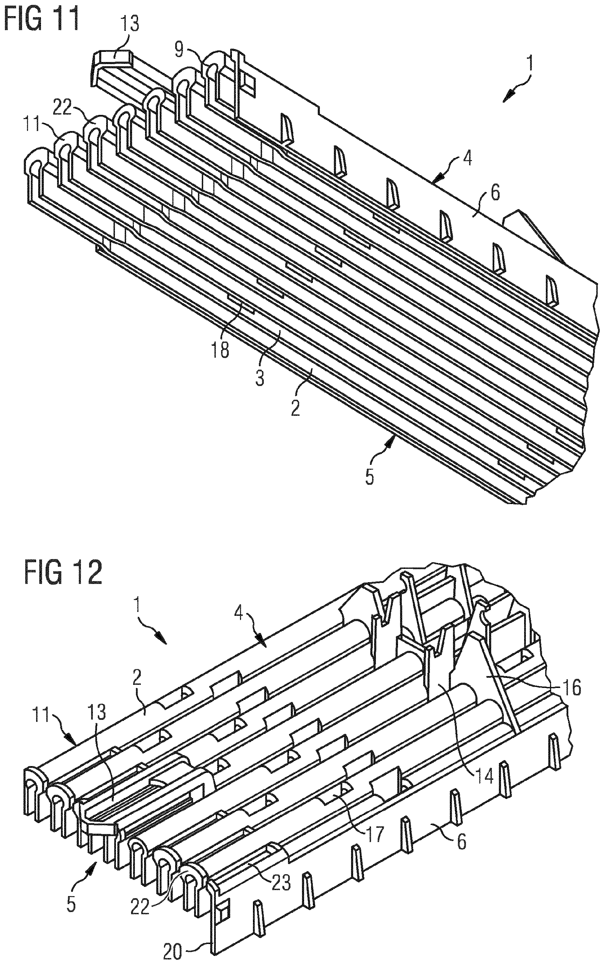

Figur 11 zeigt eine schematische perspektivische Darstellung des Leitungshalters 1 gemäß den Figuren 1 bis 2 von der Unterseite 5 des Leitungshalters 1 her. Hierbei ist die Stirnseite 9 des Leitungshalters 1 gezeigt, die der Stirnseite 8 der Figur 9 gegenüberliegt. Der Leitungshalter 1 weist an dieser Stirnseite 9 das zweite Steckgesicht 11 auf, das dazu vorgesehen ist, in das Verbindungsteil 51 eingesetzt zu werden.

Das zweite Steckgesicht 11 weist Steckstrukturen auf, die als Ausnehmungen ausgebildet sind. Bevorzugt setzen die Ausnehmungen in dem zweiten Steckgesicht 11, die Ausnehmungen in dem Leitungshalter 1 kontinuierlich fort, so dass durchgehend elektrische Leitungen 19 in den Ausnehmungen eingebracht werden können.

Das zweite Steckgesicht 11 weist Führungen 22 auf, die sich entgegen der vertikalen Richtung v erstrecken. Weiterhin ist an der Oberseite des zweiten Steckgesichts 11 der Schnapphaken 13 angeordnet, der über das zweite Steckgesicht 11 hinaus ragt. Der Schnapphaken 13 ist dazu geeignet, in die Aufnahme 12 an der Oberseite des ersten Steckgesichts 10 eingeschnappt zu werden.

Figur 12 zeigt eine schematische perspektivische Darstellung auf der Stirnseite 9 des Leitungshalters 1, die das zweite Steckgesicht 11 umfasst. In dem zweiten Steckgesicht 11 sind auf der Oberseite Schlitze 23 vorgesehen, die entlang der Ausnehmungen 2, 3 verlaufen. Die Schlitze 23 erlauben bevorzugt eine gleitende Verbindung mit einer anderen Steckstruktur.

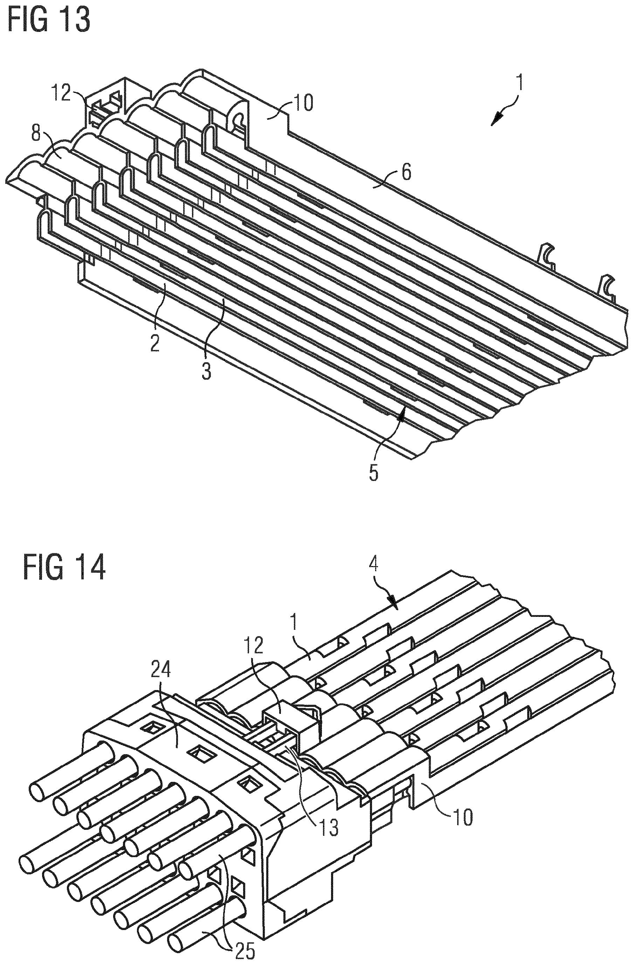

Figur 13 zeigt eine schematische perspektivische Darstellung des Leitungshaltersystems von einer Unterseite 5 her auf das erste Steckgesicht 10. Das erste Steckgesicht 10 weist Steckstrukturen auf, die die Ausnehmungen 2, 3 des Leitungshalters 1 kontinuierlich fortsetzen. An der Oberseite des Steckgesichts 10 ist die Aufnahme 12 für den Schnapphaken 13 zu sehen. Die Steckstrukturen des ersten Steckgesichts 10 sind gegenüber der Dachfläche des ersten Steckgesichts 10 zurückversetzt angeordnet.

Figur 14 zeigt ein Leitungshaltersystem gemäß einem Ausführungsbeispiel, bei dem auf die Stirnseite 8 des Leitungshalters 1 ein Einspeiser 24 aufgesetzt ist. Der Einspeiser 24 ist dazu vorgesehen, die elektrischen Leitungen 19 in dem Leitungshalter 1 des Leitungshaltersystems mit externen elektrischen Leitungen 25 elektrisch leitend zu verbinden. Der Einspeiser 24 weist hierbei den Schnapphaken 13 auf, der in die Aufnahme 12 auf dem ersten Steckgesicht 10 an der Oberseite 4 des Leitungshalters 1 eingeklippst ist.

Das Verbindungsteil 51 gemäß dem Ausführungsbeispiel der Figuren 15 und 16 weist eine Vielzahl an Ausnehmungen 53 auf, die parallel zueinander verlaufen. Die Ausnehmungen 53 verlaufen parallel zu den Seitenflächen des Verbindungsteils 51. Jede Ausnehmung 53 ist jeweils seitlich durch zwei Stege 52 begrenzt. Jeder Steg 52 ist vorliegend mit einem Stoppelement 54 versehen. Das Stoppelement 54 ragt jeweils lateral aus dem Steg 52 heraus und verengt die Ausnehmungen 53. Die Stoppelemente 54 sind dazu vorgesehen, das Einschieben der Leitungshalter 1 in das Verbindungsteil 51 in eine Haupterstreckungsebene der Leitungshalter 1 zu begrenzen. Weiterhin weist das Verbindungsteil 51 an einer Unterseite Spalte 55 auf, die durch die Stege 52 begrenzt werden. Die Ausnehmungen 53 sind durch die Spalte 55 von unten zugänglich. Schließlich weist das Verbindungsteil 51 Querstreben 56 auf, die kontinuierlich von einer Seitenfläche des Verbindungsteils 51 zur anderen Seitenfläche des Verbindungsteils 51 verlaufen. Die Stege 52 des Verbindungsteils 51 bilden vorliegend eine kammartige Struktur aus.

Das mechanische Verbindungselement 26 gemäß dem Ausführungsbeispiel der Figur 17 weist zwei Seitenteile 27 und eine Verbindungswand 28 auf, die die beiden Seitenteile 27 in einem Mittelbereich an einer Oberseite des mechanischen Verbindungselements 26 miteinander verbindet. Die Verbindungswand 26 steht hierbei im Wesentlichen senkrecht auf den beiden Seitenteilen 27. Die Seitenteile 27 des mechanischen Verbindungselements 26 sind vorliegend derart angeordnet, dass sie ausgehend von der Verbindungwand 28 aus V-förmig auseinanderlaufen. Die Seitenteile 27 des mechanischen Verbindungselements 26 ragen seitlich symmetrisch über die Verbindungswand 28 hinaus, so dass eine Kante 29 der Verbindungswand 28 zurückversetzt zwischen den beiden Seitenteilen 27 angeordnet ist. Die Seitenteile 27 sind an einer Oberkante mit strebenartigen Vorführungen 30 versehen, die jeweils über die Seitenteile 27 symmetrisch hinausragen.

Die Verbindungswand 28 weist weiterhin Ausbuchtungen 39 an den Seitenteilen 27 auf, die dazu vorgesehen sind, die Position zu dem Tragschienenelement 15 festzulegen.

Die Verbindungswand 28 des mechanischen Verbindungselements 26 umfasst weiterhin eine Feder 31. Die Feder 31 weist hierbei in einem Endbereich eine Aussparung 32 auf, die dazu vorgesehen ist, die Feder 31 auf dieser Seite zu schwächen.

Weiterhin weist die Feder 31 an den beiden gegenüberliegenden Endbereichen jeweils ein Rastelement 33 auf. Die Rastelemente 33 sind vorliegend aus zwei Flächen gebildet. Hierbei weisen die Flächen des einen Rastelements 33 einen geringeren Winkel auf als die Flächen des anderen Rastelements 33. Die Rastelemente 33 sind dazu vorgesehen, in ein Winkelelement 34 auf einer Innenfläche einer Montagewand 35 des Tragschienenelements 15 einzurasten.

Figur 18 zeigt das mechanische Verbindungselement 26 der Figur 17 in Verbindung mit einem Winkelelement 34, das an der Montagewand 35 eines Tragschienenelements 15 angeordnet ist. Das Winkelelement 34 weist einen Anschlag 36 auf. Das mechanische Verbindungselement 26 wird mit der Verbindungswand 28 so weit in das Tragschienenelement 15 hineingeschoben, dass die Kante 29 der Verbindungswand 28 an dem Anschlag 36 anstößt und das Rastelement 33 der Feder 31 in ein Fenster 37 des Winkelelements 34 einrasten kann. Außerdem weist das mechanische Verbindungselement 26 eine Kralle 38 auf, über das das mechanische Verbindungselement 26 geerdet werden kann.

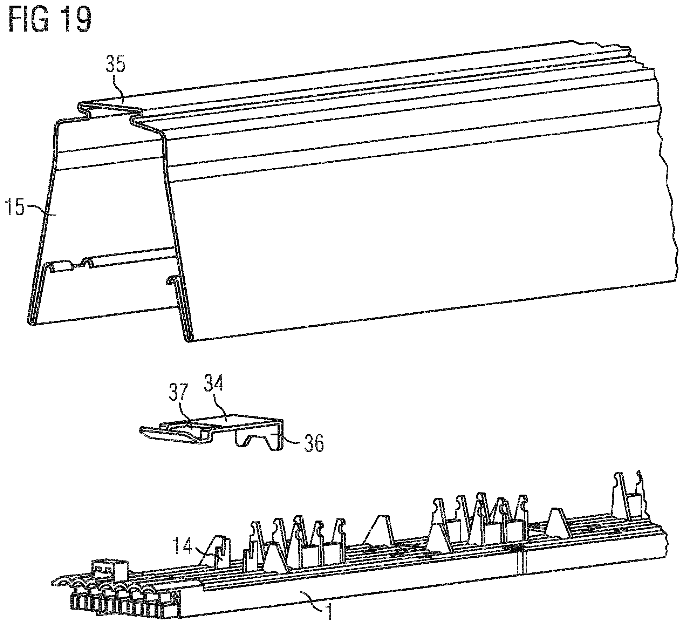

Bei dem Verfahren zur Herstellung eines Stromschienenelements 40 gemäß dem Ausführungsbeispiel der Figur 19 werden mindesten zwei Leitungshalter 1 bereitgestellt. In die Ausnehmungen 2, 3 der beiden Leitungshalter 1 werden elektrische Leitungen 19 eingebracht. Nach dem Einbringen der elektrischen Leitungen 19 in die Ausnehmungen 2, 3 der Leitungshalter 1 wird das Verbindungsteil 51 zwischen den Leitungshaltern 1 befestigt. Das Stoppelement 54 des Verbindungsteils 51 dient hierbei als Abstandshalter zwischen den beiden Leitungshaltern 1.

An der Innenfläche der Montagewand 35 des Tragschienenelements 15 wird das Winkelelement 34 befestigt. Das Winkelelement 34 weist den Anschlag 36 und das Fenster 37 auf. Über das Winkelelement 34 kann das mechanische Verbindungselement 26, wie bereits anhand der Figuren 9 und 10 erläutert, eingerastet werden.

Das Leitungshaltersystem wird mit den Befestigungselementen 14, wie etwa Rasthaken, mit seiner Oberseite an die Montagewand 35 des Tragschienenelements 15 eingedrückt. Die Ausnehmungen 2, 3 der Leitungshalter 1 sind mit den elektrischen Leitungen 19, wie etwa Kupferdrähten, versehen.

Das Stromschienenelement 40 gemäß dem Ausführungsbeispiel der Figur 20 weist eine Erdungsfeder 41 auf. Die Erdungsfeder 41 ist zwischen der Oberseite 4 des Leitungshaltersystems und der Montagewand 35 angeordnet.

Die Erdungsfeder 41 umfasst einen ersten Kontaktierungsbereich 42 und einen zweiten Kontaktierungsbereich 43, die zu der Innenfläche der Montagewand 35 weisen. Der erste Kontaktierungsbereich 42 und der zweite Kontaktierungsbereich greifen in einen S-förmig geschwungenen Bereich und einen spiegelsymmetrisch zu dem S-förmig ausgebildeten Bereich der Montagewand 35 ein. Der erste Kontaktbereich 42 und der zweite Kontaktbereich 43 weisen hierbei Spitzen (nicht dargestellt) auf, die eine elektrisch isolierende Lackierung des Tragschienenelements 15 durchstößt und so eine elektrisch leitende Verbindung zu dem Tragschienenelement 15 herstellt.

Weiter weist die Erdungsfeder 41 einen zentralen Bereich 44 auf, der zwischen dem ersten Kontaktierungsbereich 42 und dem zweiten Kontaktierungsbereich 43 angeordnet ist und ebenfalls zu der Montagewand 35 weist. Der zentrale Bereich 44 der Erdungsfeder 41 steht mit der Montagewand 35 des Tragschienenelements 15 nicht in direktem Kontakt.

Die Erdungsfeder 41 weist außerdem einen dritten Kontaktierungsbereich 45 auf, der vorliegend als offene Öse ausgebildet ist. Der als offene Öse ausgebildete dritte Kontaktierungsbereich 45 umschließt eine elektrische Leitung 19, die in einer randseitigen Ausnehmung 2, 3 des Leitungshalters 1 angeordnet ist, teilweise. Hierbei wird über den physikalischen Kontakt zwischen der Öse und der elektrischen Leitung 19 ein elektrischer Kontakt hergestellt.

Weiterhin weist die Erdungsfeder 41 ein weiteres Montageelement auf, das in eine oberseitige Ausnehmung des Leitungshalters 1 eingreift und so die Erdungsfeder 41 mechanisch stabilisiert.

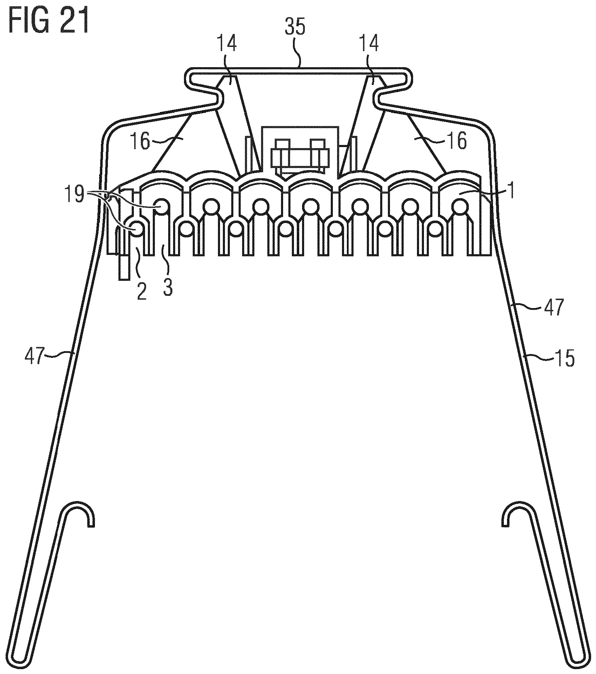

Das Stromschienenelement 40 gemäß dem Ausführungsbeispiel der Figur 21 weist den Leitungshalter 1 mit einem Justageelement 20 auf. Das Justageelement 20 erstreckt sich entlang der Seitenwand 6, 7 des Tragschienenelements 15. Das Justageelement 40 verhindert, dass der Funktionseinsatz 21 falsch herum in das Stromschienenelement 40 eingesetzt werden kann. Hierzu weist der Funktionseinsatz 21 eine entsprechende Form auf.

Weiterhin zeigt das Ausführungsbeispiel der Figur 21, dass Seitenwände 47 des Tragschienenelements 15 zumindest teilweise V-förmig ausgebildet sein können. Dies erleichtert die Positionierung des Leitungshaltersystems in dem Tragschienenelement 15.

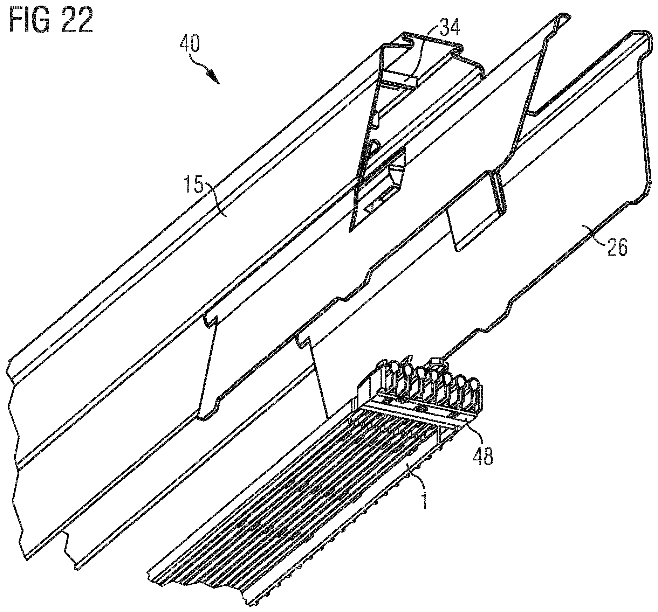

Figur 22 zeigt ein Stromschienenelement 40 gemäß einem Ausführungsbeispiel mit dem Tragschienenelement 15, dem mechanischen Verbindungselement 26 und einem Leitungshaltersystem, wobei an einer Stirnseite des Stromschienenelements 40 ein elektrisches Verbindungselement 48 angeordnet ist. Das elektrische Verbindungselement 48 ist dazu vorgesehen, mit dem Leitungshalter 1 eines weiteren Stromschienenelements 40 verbunden zu werden. Außerdem weist das Stromschienenelement 40 gemäß der Figur 22 Vorführungen 30 des mechanischen Verbindungselements 26 auf, die aus der Stirnseite des Stromschienenelements 40 herausragen und die Positionierung des Stromschienenelements 40 zu einem weiteren Stromschienenelement 40 bei deren Verbindung stabilisieren.

Bei dem Verfahren zur Herstellung eines Stromschienensystems gemäß dem Ausführungsbeispiel der Figur 23 werden zwei gleichartig ausgebildete Stromschienenelemente 40, wie sie beispielsweise anhand der Figuren 12 bis 14 bereits beschrieben wurden, miteinander verbunden. Hierzu weist jedes der Stromschienenelemente 40 die Vorführungen 30 des mechanischen Verbindungselements 26 auf. Das mechanische Verbindungselement 26 des einen Stromschienenelements 40 wird in das Tragschienenelement 15 des anderen Stromschienenelements 40 eingeschoben, bis die Kante 29 der Verbindungswand 28 des mechanischen Verbindungselements 26 an den Anschlag 36 des Winkelelements 34 der anderen Tragschiene 15 anschlägt und das Rastelelement 33 der Feder 31 auf deren geschwächter Seite in das Fenster 37 des Winkelelements 34 der zu verbindenden Tragschiene 15 einrastet. Sollen zwei Stromschienenelemente 40 wieder voneinander gelöst werden, so kann zunächst das elektrische Verbindungselement 48 durch Ziehen nach unten entfernt werden und dann das mechanische Verbindungselement 26 aus der Tragschiene 15 gelöst werden. Auf diese Art und Weise kann die Stirnwand des Stromschienenelements 40 mit dem elektrischen Verbindungselement 48 bündig ausgebildet werden.

Zur Verbindung der Leitungshalter 1 eines anderen Stromschienenelements 40 weist jedes Stromschienenelement 40 bevorzugt ein elektrisches Verbindungselement 48 auf. Die Verbindung zweier Leitungshalter 1 über das elektrische Verbindungselement 48 wird im Folgenden mit Hilfe der Figuren 17 bis 20 näher erläutert.

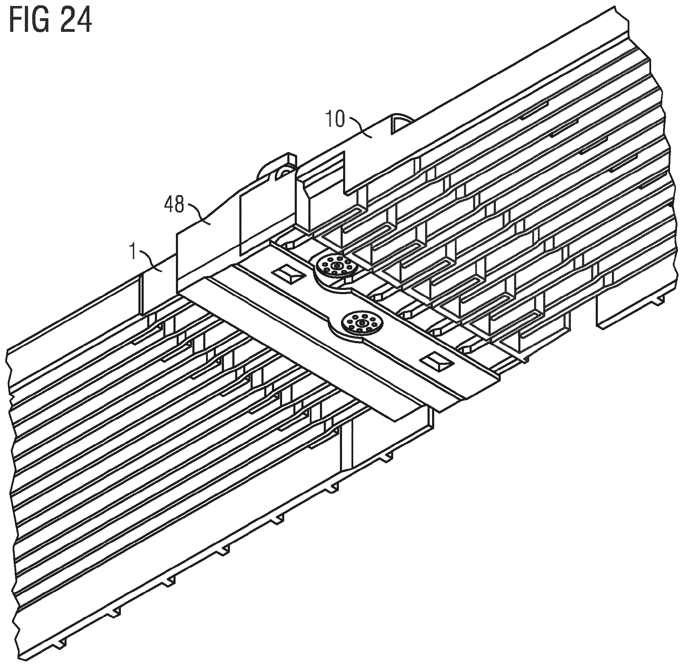

Figur 24 zeigt eine schematische perspektivische Darstellung zweier Leitungshalter 1, die mit einem elektrischen Verbindungselement 48 miteinander verbunden sind. Hierbei greift das erste Steckgesicht 10 des einen Leitungshalters 1 in eine Stirnseite des elektrischen Verbindungselements 48 und das zweite Steckgesichts 11 des anderen Leitungshalters 1 in die andere Stirnseite des elektrischen Verbindungselements 48 ein. Das elektrische Verbindungselement 48 ist innerhalb des Stromschienenelements 40, das ein Leitungshaltersystem mit mehreren Leitungshaltern 1 aufweist, an einem der Leitungshalter 1 befestigt, die an der Stirnseite des Tragschienenelements 15 zugänglich sind. Das elektrische Verbindungselement 48 ist dazu vorgesehene, beim Zusammensetzen verschiedener Stromschienenelemente 40 zu einem Stromschienensystem, die Leitungshaltersysteme der beiden zu verbindenden Stromschienenelemente 40 miteinander zu verbinden.

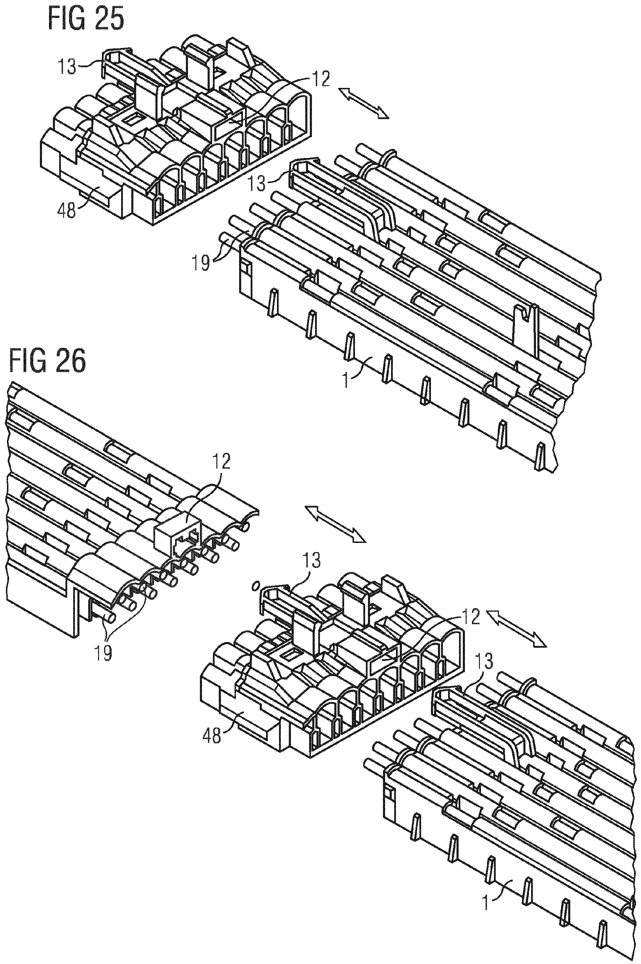

Das Aufsetzen des elektrischen Verbindungselements 48 auf den Leitungshalter 1 ist noch einmal in Figur 25 gezeigt. Der Leitungshalter 1 wird mit der Stirnseite, die das zweite Steckgesicht 11 mit dem Schnapphaken 13 an der Oberseite aufweist, in die Stirnseite des elektrischen Verbindungselements 48 gesteckt, das stirnseitig das erste Steckgesicht 10 aufweist, an dessen Oberseite die Aufnahme 12 für den Schnapphaken 13 angebracht ist. Das erste Steckgesicht 10 und das zweite Steckgesicht 11 sind hierbei dazu geeignet, mechanisch stabil durch Stecken miteinander verbunden zu werden. Auf der gegenüberliegenden Stirnseite des elektrischen Verbindungselements 48 ist das erste Steckgesicht 10 angeordnet, das auf der Oberseite einen weiteren Schnapphaken 13 aufweist.

Wie in Figur 26 schematisch dargestellt ist, kann das elektrische Verbindungselement 48 mit dem zweiten Steckgesicht 11 in das erste Steckgesicht 10 eines weiteren Leitungshalters 1 eingebracht werden und über den Schnapphaken 13 an der Oberseite des elektrischen Verbindungselements 48 in die Aufnahme 12 an der Oberseite des ersten Steckgesichts 10 des Leitungshalters 1 verbunden werden.

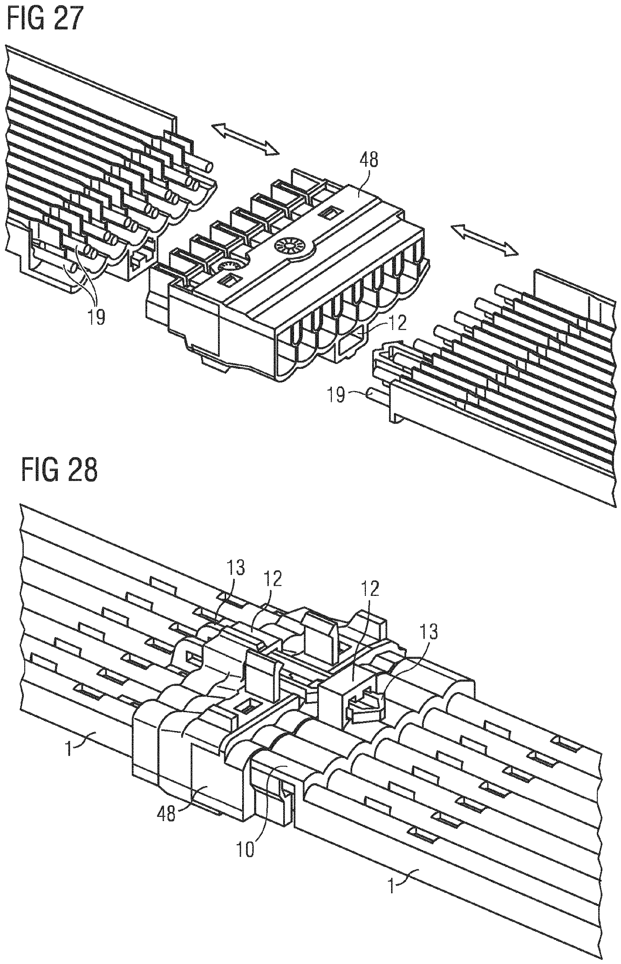

Figur 27 zeigt die Verbindung zweier Leitungshalter 1 über ein elektrisches Verbindungselement noch einmal von der Unterseite 5 der Leitungshalter 1 her. Die elektrischen Leitungen 19 sind hierbei von der Unterseite 4 der Leitungshalter 1 von außen zugänglich, verlaufen in dem elektrischen Verbindungselement 48 jedoch abgeschlossen, da das elektrische Verbindungselement 48 eine abgeschlossene Unterseite aufweist.

Figur 28 zeigt zwei Leitungshalter 1, die miteinander durch das elektrische Verbindungselement 48 verbunden sind. Hierbei greift der Schnapphaken 13 an der Oberseite 4 des einen Leitungshalters 1 in die Aufnahme 12 an der Oberseite des elektrischen Verbindungselements 48 und der Schnapphaken 13 an der Oberseite des elektrischen Verbindungselements 48 in die Aufnahme 12 an der Oberseite 4 des anderen Leitungshalter 1 mechanisch stabil ein.

Figur 29 zeigt eine schematische Draufsicht auf die Stirnseite eines Stromschienensystems. Das Stromschienensystem ist aus mehreren Stromschienenelementen 40 zusammengesetzt. Das Stromschienensystem weist den Funktionseinsatz 21 auf, der vorliegend als Leuchteneinsatz ausgebildet ist. Der Leuchteneinsatz kann hierbei über ein elektrisches Abgriffelement 49, das entgegen der vertikalen Richtung v verläuft, einfach in die Ausnehmungen 2, 3 des Leitungshalters 1 eingesetzt und elektrisch kontaktiert werden. Weiterhin ist ein Verschlussriegel 50 vorgesehen, der den Leuchteneinsatz in dem Stromschienenelement 40 befestigt. Der Funktionseinsatz 21 weist hierbei eine Form auf, so dass der Funktionseinsatz 21 aufgrund des Justageelements 20 nur richtig herum in die Tragschiene 15 eingesetzt werden kann.

### Bezugszeichenliste

- 1: Leitungshalter
- 2: erste Ausnehmung
- 3: zweite Ausnehmung
- 4: Oberseite des Leitungshalters
- 5: Unterseite des Leitungshalters
- 6, 7: Seitenflächen des Leitungshalters
- 8, 9: Stirnseiten des Leitungshalters
- 10: erstes Steckgesicht
- 11: zweites Steckgesicht
- 12: Aufnahme für einen Schnapphaken
- 13: Schnapphaken
- 14: Befestigungselement
- 15: Tragschienenelement
- 16: Positionierhilfe
- 17: Durchbruch
- 18: Nase
- 19: elektrische Leitung
- 20: Justageelement
- 21: Funktionseinsatz
- 22: Führung
- 23: Schlitz
- 24: Einspeiser
- 25: externe elektrische Leitung
- 26: mechanisches Verbindungselement
- 27: Seitenteil des mechanischen Verbindungselements
- 28: Verbindungswand des mechanischen Verbindungselements
- 29: Kante der Verbindungswand
- 30: Vorführung
- 31: Feder
- 32: Aussparung
- 33: Rastelement
- 34: Winkelelement
- 35: Montagewand
- 36: Anschlag
- 37: Fenster
- 38: Kralle
- 39: Ausbuchtung
- 40: Stromschienenelement
- 41: Erdungsfeder
- 42: erster Kontaktierungsbereich
- 43: zweiter Kontaktierungsbereich
- 44: zentraler Bereich
- 45: dritter Kontaktierungsbereich
- 46: Montageelement
- 47: Seitenwand des Tragschienenelements
- 48: elektrisches Verbindungselement
- 49: elektrisches Abgriffelement
- 50: Verschlussriegel
- 51: Verbindungsteil
- 52: Steg
- 53: Ausnehmung
- 54: Stoppelement
- 55: Spalt
- 56: Querstreben
- V: vertikale Richtung

## Patentansprüche

1. Leitungshaltersystem für ein Stromschienenelement (40) mit:
- mindestens zwei, vorzugsweise gleichartig ausgebildeten, Leitungshaltern (1), wobei jeder Leitungshalter (1) eine Vielzahl parallel zueinander angeordneten ersten Ausnehmungen (2) und eine Vielzahl parallel zueinander angeordneten zweiten Ausnehmungen (3) umfasst, wobei die ersten Ausnehmungen (2) und die zweiten Ausnehmungen (3) zur Aufnahme elektrischer Leitungen (19) vorgesehen sind, und
- einem Verbindungsteil (51), das die beiden Leitungshalter (1) an ihren Stirnseiten mechanisch miteinander verbindet, wobei
- das Verbindungsteil (51) eine Vielzahl an Ausnehmungen (53) aufweist, die die ersten Ausnehmungen (2, 3) und die zweiten Ausnehmungen (2, 3) der beiden Leitungshalter (1) miteinander verbindet, wobei die Ausnehmungen (53) des Verbindungsteils (51) seitlich durch Stege (52) begrenzt werden;
**dadurch gekennzeichnet, dass** das Verbindungsteil (51) an einer Unterseite Spalte (55) aufweist, die zwischen den Stegen (52) angeordnet sind.

2. Leitungshaltersystem nach einem der obigen Ansprüche, bei dem die ersten Ausnehmungen (2) in einer ersten Haupterstreckungsebene liegen und die zweiten Ausnehmungen (3) in einer zweiten Haupterstreckungsebene liegen, und
- die erste Haupterstreckungsebene und die zweite Haupterstreckungsebene in einer vertikalen Richtung (v), die senkrecht auf den Haupterstreckungsebenen steht, beabstandet voneinander angeordnet sind.

3. Leitungshaltersystem nach dem vorherigen Anspruch, bei dem die ersten Ausnehmungen (2) und die zweiten Ausnehmungen (3) in einer horizontalen Richtung alternierend angeordnet sind.

4. Leitungshaltersystem nach einem der obigen Ansprüche, bei dem
- jeder Leitungshalter (1) zwei gegenüberliegende Stirnseiten (8, 9) aufweist,
- an der einen Stirnseite (8, 9) ein erstes Steckgesicht (10) und an der anderen Stirnseite (8, 9) ein zweites Steckgesicht (11) aufweist, und
- das erste Steckgesicht (10) und das zweite Steckgesicht (11) in das Verbindungsteil (51) eingesteckt sind.

5. Leitungshaltersystem nach einem der obigen Ansprüche, bei dem das Verbindungsteil (51) mindesten ein Stoppelement (54) aufweist, an den zumindest ein Leitungshalter (1) beim Einschieben in das Verbindungsteil (51) anstößt.

6. Leitungshaltersystem nach einem der obigen Ansprüche, bei dem die beiden Leitungshalter (1) mit ihren Stirnseiten (8, 9) direkt an das Stoppelement angrenzen (51).

7. Leitungshaltersystem nach einem der obigen Ansprüche, bei dem das Verbindungsteil (51) an der Unterseite zwei Querstreben (56) aufweist, von denen jede an einer der Stirnseiten des Verbindungsteils (51) angrenzt, wobei die Querstreben (56) von einer Seitenfläche des Leitungshaltersystems zur anderen Seitenfläche des Leitungshaltersystems verlaufen.

8. Stromschienenelement (40) mit:
- einem Tragschienenelement (15), das zwei gegenüberliegende Seitenwände (47) und eine Montagewand (35) aufweist, und
- mindestens einem Leitungshaltersystem nach einem der Ansprüche 1 bis 7, wobei
- die Haupterstreckungsebenen des Leitungshaltersystems entlang der Montagewand (35) des Tragschienenelements (15) angeordnet sind, und
- Öffnungen der Ausnehmungen (2, 3) in einer vertikale Richtung (v), die senkrecht auf den Haupterstreckungsebenen steht, weisen.

9. Stromschienenelement (40) nach dem vorherigen Anspruch, mit einem Funktionseinsatz (21), der ein elektrisches Abgriffelement (49) aufweist, wobei das elektrische Abgriffelement (49) parallel zur vertikalen Richtung (v) angeordnet ist und in die Öffnungen eingreift.

10. Stromschienenelement (40) nach einem der Ansprüche 8 bis 9, das eine Erdungsfeder (41) zwischen der Montagewand (35) und dem Leitungshaltersystem aufweist, wobei die Erdungsfeder (41) das Tragschienenelement (15) erdet.

11. Verfahren zur Herstellung eines Stromschienenelements (40) mit den folgenden Schritten:
- Bereitstellen eines Leitungshaltersystems nach einem der Ansprüche 1 bis 7,
- Befestigen von jeweils einem Winkelelement (34) in jeweils einem Endbereich einer Innenfläche der Montagewand (35) eines Tragschienenelements (15),
- Befestigen des Leitungshaltersystems an der Innenfläche der Montagewand (35) des Tragschienenelements (15).

12. Verfahren zur Herstellung eines Stromschienensystems, bei dem zwei Stromschienenelemente (40) nach einem der Ansprüche 8 bis10 über ihre Stirnseiten miteinander verbunden werden.

## Claims

1. Line holder system for a busbar element (40) having:
- at least two, preferably identically designed, line holders (1), wherein each line holder (1) comprises a multiplicity of first recesses (2) arranged parallel to one another and a multiplicity of second recesses (3) arranged parallel to one another, wherein the first recesses (2) and the second recesses (3) are provided for receiving electrical lines (19), and
- a connecting part (51) which mechanically connects the two line holders (1) to one another at their end sides, wherein
- the connecting part (51) has a multiplicity of recesses (53) which connect the first recesses (2, 3) and the second recesses (2, 3) of the two line holders (1) to one another, wherein the recesses (53) of the connecting part (51) are delimited laterally by webs (52);
**characterised in that** the connecting part (51) has gaps (55) on an underside, which gaps are arranged between the webs (52).

2. Line holder system according to one of the above claims, in which the first recesses (2) lie in a first main extension plane and the second recesses (3) lie in a second main extension plane, and
- the first main extension plane and the second main extension plane are arranged spaced apart from one another in a vertical direction (v) which stands perpendicularly on the main extension planes.

3. Line holder system according to the preceding claim, in which the first recesses (2) and the second recesses (3) are arranged alternately in a horizontal direction.

4. Line holder system according to one of the above claims, in which
- each line holder (1) has two opposite end sides (8, 9),
- on the one end side (8, 9) has a first plug-in face (10) and on the other end side (8, 9) has a second plug-in face (11), and
- the first plug-in face (10) and the second plug-in face (11) are plugged into the connecting part (51).

5. Line holder system according to one of the above claims, in which the connecting part (51) has at least one stop element (54), against which at least one line holder (1) abuts when being pushed into the connecting part (51).

6. Line holder system according to one of the above claims, in which the two line holders (1) with their end sides (8, 9) directly adjoin the stop element (51).

7. Line holder system according to one of the above claims, in which the connecting part (51) has on the underside two transverse struts (56), each of which adjoins one of the end sides of the connecting part (51), wherein the transverse struts (56) run from one side face of the line holder system to the other side face of the line holder system.

8. Busbar element (40) having:
- a support rail element (15), which has two opposite side walls (47) and a mounting wall (35), and
- at least one line holder system according to one of claims 1 to 7, wherein
- the main extension planes of the line holder system are arranged along the mounting wall (35) of the support rail element (15), and
- openings of the recesses (2, 3) point in a vertical direction (v) which stands perpendicularly on the main extension planes.

9. Busbar element (40) according to the preceding claim, having a functional insert (21) which has an electrical tap element (49), wherein the electrical tap element (49) is arranged parallel to the vertical direction (v) and engages in the openings.

10. Busbar element (40) according to one of claims 8 to 9, which has a grounding spring (41) between the mounting wall (35) and the line holder system, wherein the grounding spring (41) grounds the support rail element (15).

11. Method for producing a busbar element (40) having the following steps:
- providing a line holder system according to one of claims 1 to 7,
- fastening one respective angle element (34) in one respective end region of an inner surface of the mounting wall (35) of a support rail element (15),
- fastening the line holder system to the inner surface of the mounting wall (35) of the support rail element (15).

12. Method for producing a busbar system, in which two busbar elements (40) according to one of claims 8 to 10 are connected to one another via their end sides.

## Revendications

1. Système de support de câbles pour un élément de rail conducteur (40), avec :
- au moins deux supports de câbles (1), constitués de préférence de façon similaire, chaque support de câbles (1) comprenant une multiplicité de premiers évidements (2) disposés parallèlement entre eux et une multiplicité de deuxièmes évidements (3) disposés parallèlement entre eux, les premiers évidements (2) et les deuxièmes évidements (3) étant prévus pour la réception de lignes électriques (19), et
- avec une partie de raccordement (51) qui raccorde mécaniquement l'un à l'autre les deux supports de câbles (1) au niveau de leurs côtés frontaux,
- la partie de raccordement (51) comportant une multiplicité d'évidements (53) qui raccordent les uns aux autres les premiers évidements (2, 3) et les deuxièmes évidements (2, 3) des deux supports de câbles (1), les évidements (53) de la partie de raccordement (51) étant limités latéralement par des barrettes (52) ;
**caractérisé en ce que** la partie de raccordement (51) comporte au niveau d'un côté inférieur des interstices (55) qui sont disposés entre les barrettes (52).

2. Système de support de câbles selon l'une des revendications ci-dessus, dans lequel les premiers évidements (2) sont situés dans un premier plan d'extension principal, et les deuxièmes évidements (3) sont situés dans un deuxième plan d'extension principal, et
- le premier plan d'extension principal et le deuxième plan d'extension principal sont disposés à distance l'un de l'autre dans une direction verticale (v) qui est perpendiculaire aux plans d'extension principaux.

3. Système de support de câbles selon la revendication précédente, dans lequel les premiers évidements (2) et les deuxièmes évidements (3) sont disposés de façon alternée dans une direction horizontale.

4. Système de support de câbles selon l'une des revendications ci-dessus, dans lequel
- chaque support de câbles (1) comporte deux côtés frontaux (8, 9) opposés,
- présente une première face d'enfichage (10) au niveau d'un côté frontal (8, 9) et une deuxième face d'enfichage (11) au niveau de l'autre côté frontal (8, 9), et
- la première face d'enfichage (10) et la deuxième face d'enfichage (11) sont enfichées dans la partie de raccordement (51).

5. Système de support de câbles selon l'une des revendications ci-dessus, dans lequel la partie de raccordement (51) comporte au moins un élément d'arrêt (54) sur lequel au moins un support de câbles (1) vient buter lors de l'insertion dans la partie de raccordement (51).

6. Système de support de câbles selon l'une des revendications ci-dessus, dans lequel les deux supports de câbles (1) jouxtent directement l'élément d'arrêt avec leurs côtés frontaux (8, 9). (51)

7. Système de support de câbles selon l'une des revendications ci-dessus, dans lequel la partie de raccordement (51) présente au niveau du côté inférieur deux traverses (56) dont chacune jouxte un des côtés frontaux de la partie de raccordement (51), les traverses (56) s'étendant à partir d'une surface latérale du système de support de câbles jusqu'à l'autre surface latérale du système de support de câbles.

8. Élément de rail conducteur (40), avec :
- un élément de rail porteur (15) qui comporte deux parois latérales (47) opposées et une paroi de montage (35), et
- au moins un système de support de câbles selon l'une des revendications 1 à 7,
- les plans d'extension principaux du système de support de câbles sont disposés le long de la paroi de montage (35) de l'élément de rail porteur (15), et
- des ouvertures des évidements (2, 3) sont dirigées dans une direction verticale (v) qui est perpendiculaire aux plans d'extension principaux.

9. Élément de rail conducteur (40) selon la revendication précédente, avec un insert fonctionnel (21) qui comporte un élément de branchement (49) électrique, l'élément de branchement (49) électrique étant disposé parallèlement à la direction verticale (v) et engrenant dans les ouvertures.

10. Élément de rail conducteur (40) selon l'une des revendications 8 à 9, qui présente un ressort de mise à la terre (41) entre la paroi de montage (35) et le système de support de câbles, le ressort de mise à la terre (41) mettant à la terre l'élément de rail porteur (15).

11. Procédé de fabrication d'un élément de rail conducteur (40), avec les étapes suivantes :
- fourniture d'un système de support de câbles selon l'une des revendications 1 à 7,
- fixation de respectivement un élément d'angle (34) dans respectivement une zone d'extrémité d'une surface intérieure de la paroi de montage (35) d'un élément de rail porteur (15),
- fixation du système de support de câbles sur la surface intérieure de la paroi de montage (35) de l'élément de rail porteur (15).

12. Procédé de fabrication d'un système de rail porteur, dans lequel deux éléments de rail conducteur (40) selon l'une des revendications 8 à 10 sont raccordés l'un à l'autre par le biais de leurs côtés frontaux.
